(19) Europäisches Patentamt
European Patent Office
Office européen des brevets

(11) EP 1 866 364 B1

(12) # FASCICULE DE BREVET EUROPEEN

(45) Date de publication et mention de la délivrance du brevet:
**16.05.2012 Bulletin 2012/20**

(21) Numéro de dépôt: **06725978.8**

(22) Date de dépôt: **22.02.2006**

(51) Int Cl.:
***C08K 5/56*** *(2006.01)* ***C07F 15/00*** *(2006.01)*
***C08K 5/00*** *(2006.01)* ***C08K 3/00*** *(2006.01)*
*C08L 83/04* *(2006.01)*

(86) Numéro de dépôt international:
**PCT/FR2006/000396**

(87) Numéro de publication internationale:
**WO 2006/095068 (14.09.2006 Gazette 2006/37)**

(54) **UTILISATION D'UN COMPOSE PARTICULIER DU PLATINE POUR AMELIORER LA RESISTANCE DES ELASTOMERES SILICONES CONTRE LA DEGRADATION SOUS L'EFFET DES TRES HAUTES TEMPERATURES**

VERWENDUNG EINER SPEZIELLEN PLATINVERBINDUNG ZUR VERBESSERUNG DER BESTÄNDIGKEIT VON SILIKONELASTOMEREN GEGENÜBER ABBAU INFOLGE SEHR HOHER TEMPERATUREN

USE OF A SPECIFIC PLATINUM COMPOUND IN ORDER TO IMPROVE THE RESISTANCE OF SILICON ELASTOMERS TO DEGRADATION CAUSED BY VERY HIGH TEMPERATURES

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **04.03.2005 FR 0502180**

(43) Date de publication de la demande:
**19.12.2007 Bulletin 2007/51**

(73) Titulaire: **Bluestar Silicones France**
**69486 Lyon Cedex 03 (FR)**

(72) Inventeurs:
- **BLANC-MAGNARD, Delphine**
**F-69007 Lyon (FR)**
- **POUCHELON, Alain**
**F-69330 Meyzieu (FR)**
- **STERIN, Sébastien**
**F-69002 Lyon (FR)**
- **THIRIA, Rémi**
**F-69006 Lyon (FR)**

(56) Documents cités:
**WO-A-02/098971** **US-A- 4 777 087**
**US-B1- 6 323 253** **US-B1- 6 387 518**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 866 364 B1

Printed by Jouve, 75001 PARIS (FR)

## Description

CONTEXTE TECHNIQUE DE L'INVENTION

La présente invention a pour objet l'utilisation selon la revendication 1, comme additifs stabilisants permettant d'améliorer la résistance contre la dégradation des élastomères silicones sous l'effet de très hautes températures :

→ d'au moins un composé particulier du platine,
→ dans une composition polyorganosiloxane destinée à l'obtention d'un élastomère silicone, soit réticulant à température élevée sous l'action de péroxydes organiques (composition appelée HCR ou EVC) soit réticulant à température ambiante ou à la chaleur par des réactions de polyaddition en présence d'un catalyseur métallique (composition appelée RTV, LSR ou EVC de polyaddition).

Les expressions RTV, LSR, EVC sont bien connues de l'homme de métier : RTV est l'abréviation de "Room Temperature Vulcanizing" ; LSR est l'abréviation de "Liquid Silicone Rubber" ; HCR est l'abréviation de "Heat Cured Rubber" et EVC est l'abréviation de "Elastomère Vulcanisable à Chaud".
Dans le domaine de l'électrotechnique, les compositions polyorganosiloxanes dont on a parlé ci-avant peuvent servir par exemple à la réalisation des enveloppes ou isolants primaires entrant dans la constitution de fils ou câbles électriques protégés contre l'incendie.
Par l'expression "fils ou câbles électriques protégés contre l'incendie", on entend définir des fils ou câbles électriques qui doivent garantir un comportement au feu de haute qualité en termes, au moins, de cohésion des cendres et d'opacité des fumées. Les caractéristiques que doivent présenter les fils ou câbles électriques protégés contre l'incendie, font l'objet de réglementations légales dans de nombreux pays et des normalisations rigoureuses ont été établies.
En France, par exemple, une norme importante relative aux essais de tenue au feu des câbles électriques, qu'il convient de satisfaire, est la norme NF C 32-070 CR1 qui concerne la durée de fonctionnement des câbles brûlant dans des conditions définies. La résistance au feu est à mettre en partie au moins sur le compte de la production de cendres qui doivent présenter une certaine cohésion permettant de conserver un isolement suffisant pour le fonctionnement des câbles. Dans cet essai, chaque échantillon de câble est positionné dans un tube métallique qui lui-même est ensuite placé dans un four dont la température atteint 920°C en 50 minutes et cette température est maintenue ensuite pendant 15 minutes ; durant cet essai, l'échantillon de câble est soumis à des chocs réguliers (par l'intermédiaire d'une barre de choc qui tape sur le tube métallique à raison de deux coups par minute) ; l'essai est réussi si des lampes témoins, branchées sur le câble alimenté à une tension nominale, ne sont pas éteintes à la fin de la durée de l'essai (c'est-à-dire au bout de 65 minutes) ; le norme est satisfaite si au moins 80 % en nombre des essais réalisés sont réussis.
Un câble électrique est constitué, selon la technique antérieure connue, d'un ou plusieurs monoconducteur(s) (en général à base de Cu ou d'Al) ; chacun de ces monoconducteurs est protégé par une enveloppe ou isolant primaire fait d'une ou plusieurs couche(s) concentrique(s) à base d'élastomère silicone. Autour de cette enveloppe ou de ces enveloppes (dans le cas d'un câble à plusieurs monoconducteurs) est (sont) prévu(s) un ou plusieurs élément(s) de remplissage et/ou un ou plusieurs élément(s) de renfort à base notamment de fibres de verre et/ou de fibres minérales. Puis on procède ensuite au gainage extérieur pouvant comprendre une ou plusieurs gaine(s).
Dans le cas d'un câble électrique à plusieurs monoconducteurs, le (ou les) élément(s) de remplissage et/ou le (ou les) élément(s) de renfort, qui est (sont) disposé(s) autour des monoconducteurs (équipés chacun de son isolant primaire), constitue(nt) une enveloppe commune à l'ensemble des monoconducteurs. Bien que l'élastomère silicone entrant dans la constitution des câbles soit essentiellement le matériau constitutif du (ou des) isolant(s) primaire(s), il peut être présent aussi, en proportions variables : dans le (ou les) élément(s) de remplissage et/ou dans le (ou les) élément(s) de renfort (constituant l'enveloppe commune dans le cas d'un câble à plusieurs monoconducteurs) ; et/ou dans la (ou les) gaine(s) extérieure(s).
Dans le domaine de l'électrotechnique, les compositions polyorganosiloxanes dont on a parlé ci-avant peuvent servir encore par exemple dans toutes les applications dans lesquelles on peut mettre en oeuvre des élastomères de polyorganosiloxanes non seulement difficilement combustibles mais aussi résistant aux courants de fuite et à l'arc électrique ; ils peuvent être utilisés notamment pour réaliser des matériaux d'isolation électrique, des isolateurs moyenne tension et haute tension, des accessoires d'extrémité de câble, des jonctions de câble, des capuchons d'anode pour tubes de télévision, et des objets moulés ou des articles extrudés pour l'industrie aéronautique.
Dans ce contexte, une autre norme importante relative aux essais de tenue au feu qu'il convient également de satisfaire et la norme internationale CEI 60587 (CEI est l'abréviation de l'expression : Commission Electrotechnique Internationale) qui concerne la détermination des indices de résistance et de tenue au cheminement des matériaux isolants solides soumis à des conditions de températures sévères ; l'indice de tenue au cheminement, associé à la détermination de la valeur de l'érosion quand cela est demandé, est utilisé comme critère d'acceptation ainsi que comme critère de contrôle de la qualité des matériaux fabriqués.

Le platine est un additif stabilisant connu pour son effet positif vis-à-vis de la dégradation des élastomères silicones.

Il est connu, d'après JP-A-76/035 501, d'utiliser un mélange de platine et d'un oxyde mixte de fer de formule $(FeO)_x$, $(Fe_2O_3)_y$ où le rapport x / y est compris entre 0,05 / 1 et 1 / 1, pour améliorer les propriétés de résistance à la flamme des élastomères silicones obtenus à partir de compositions EVC.

Il est connu, d'après FR-A-2 166 313 et EP-A-0 347 349, d'utiliser un mélange de platine avec au moins un oxyde de métal rare, en particulier un mélange de platine avec de l'oxyde de cérium-IV $CeO_2$, pour améliorer les propriétés de résistance à la flamme des élastomères silicones obtenus à partir de compositions EVC (FR-A-2 166 313) ou de compositions RTV (EP-A-0 347 349).

Il est encore connu, d'après EP-A- 0 951 503 que l'utilisation de mélanges à base de platine et de composés de métaux de transition autres que le platine permet aussi d'améliorer les propriétés de résistance au cheminement et à l'arc des élastomères silicones.

Le platine dont il est question dans cet art antérieur peut être notamment :

- sous forme de platine métallique (élémentaire), ou
- ou sous les formes suivantes :
  - d'acide chloroplatinique $H_2PtCl_6$, $6H_2O$ (tel que décrit dans le brevet US-A-2 823 218),
  - d'acide chloroplatinique anhydre,
  - de $PtCl_2 [P(CH_2 - CH_2 - CH_3)_3]_2$,
  - de complexes tels que ceux de formule $(PtCl_2$, oléfine$)_2$ décrits dans le brevet US-A-3 159 601, l'oléfine du complexe représentant notamment l'éthylène, le propylène, le butylène, le cyclohexène, le styrène,
  - de $(PtCl_2, C_3H_6)_2$, complexe de chlorure de platine et de cyclopropane, décrit dans le brevet américain US-A-3 159 662,
  - de complexes du platine et d'organopolysiloxanes vinylés tels que par exemple le catalyseur de Karstedt (cf. US-A-3 775 452).

L'acide chloroplatinique anhydre et le catalyseur de Karstedt sont des exemples de stabilisants platiniques particulièrement appropriés.

OBJET DE L'INVENTION

La Demanderesse a maintenant trouvé, et c'est ce qui constitue l'objet de la présente invention, que la dégradation des élastomères silicones issus de compositions polyoganosiloxanes de type RTV, LSR, EVC de polyaddition ou EVC est bien moindre si on utilise comme additif stabilisant au moins un composé particulier du platine répondant à la définition qui sera donnée dans la suite du présent mémoire.

Plus précisément, la présente invention concerne donc l'utilisation selon la revendication 1, comme additifs stabilisants permettant d'améliorer la résistance contre la dégradation des élastomères silicones sous l'effet de très hautes températures :

→ de platine,
→ dans une composition polyorganosiloxane C destinée à l'obtention d'un élastomère silicone, soit réticulant à température élevée sous l'action de péroxydes organiques, soit réticulant à température ambiante ou à la chaleur par des réactions de polyaddition en présence d'un catalyseur métallique,
→ ladite utilisation étant caractérisée en ce que le platine est sous forme d'au moins un composé choisi dans le groupe consistant en :

a) au moins un complexe du platine sélectionné parmi les produits de formule (I) :

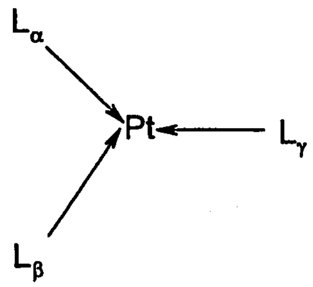

(I)

dans laquelle:

➢ $L_\gamma$ représente un carbène de formule (II) :

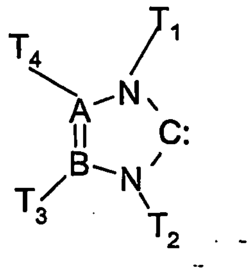

II

(II)

dans laquelle :

■ A et B représentent indépendamment C ou N, étant entendu que lorsque A représente N, alors $T_4$ ne représente rien et lorsque B représente N, alors $T_3$ ne représente rien ;
■ $T_3$ et $T_4$ représentent indépendamment un atome d'hydrogène ; un groupe alkyle ; cycloalkyle éventuellement substitué par alkyle ou alkoxy ; aryle éventuellement substitué par alkyle ou alkoxy; alcényle ; alcynyle; ou arylalkyle dans lequel la partie aryle est éventuellement substituée par alkyle ou alkoxy ; ou bien
■ $T_3$ et $T_4$ peuvent former ensemble et avec A et B quand ceux-ci représentent chacun un atome de carbone, un aryle ;
■ $T_1$ et $T_2$ représentent indépendamment un groupe alkyle ; un groupe alkyle éventuellement substitué par alkyle ; un groupe alkyle perfluoré ou éventuellement substitué par un groupe perfluoroalkyle ; cycloalkyle éventuellement substitué par alkyle ou alkoxy ; aryle éventuellement substitué par alkyle ou alkoxy ; alcényle ; alcynyle ; ou arylalkyle dans lequel la partie aryle est éventuellement substituée par alkyle ou alkoxy; ou bien
■ $T_1$ et $T_2$ représentent indépendamment un radical monovalent de formule (V) suivante :

$$V_1 — V_2 \qquad \textbf{(V)}$$

dans laquelle :

- $V_1$ est un radical divalent hydrocarboné, de préférence un alkylène,
- V2 est un radical monovalent choisi dans le groupe des substituants suivants:
    - ♦ alcoxy, $-OR^O$ avec $R^O$ correspondant à alkyle, aryle,
    - ♦ amine, de préférence $N(R^O)_2$ avec $R^O$ correspondant à hydrogène, alkyle, aryle,

■ $T_1$ et $T_2$ représentent indépendamment un radical monovalent de formule (W) suivante :

$$W_1 — \omega — W_2 \qquad \textbf{(W)}$$

dans laquelle :

- $W_1$ est un radical divalent hydrocarboné, de préférence un alkylène linéaire ou ramifié en $C_1$-$C_{10}$, éventuellement substitué,
- w représente :

$$-R^1C=CR^1-$$

avec $R^1$ correspondant à H ou alkyle
ou

$$-C\equiv C-$$

• $W_2$ est un radical monovalent choisi dans le groupe des substituants suivants :

♣ R2 = alkyle, H ;

♣ Si-alkyle ou Si-alcoxy, de préférence $-Si(R^3)_3$
avec $R^3$ = alkyle ;

♣ cétone, de préférence :

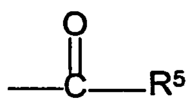

avec $R^5$ = alkyle ;

♣ carboxy, de préférence

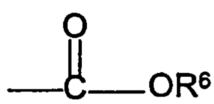

avec $R^6$ = alkyle ;

♣ amide, de préférence

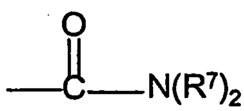

avec $R^7$ = H, alkyle ;
acyle, de préférence

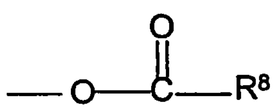

avec $R^8$ = alkyle ;

■ ou bien encore les substituants $T_1$, $T_2$, $T_3$ et $T_4$ peuvent former deux à deux, lorsqu'ils sont situés sur deux sommets adjacents dans la formule (II), une chaîne hydrocarbonée saturée ou insaturée ;

➢ $L_\alpha$ et $L_\beta$ sont des ligands identiques ou différents entre eux et

→ représentent chacun :

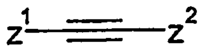

**(III.1)**

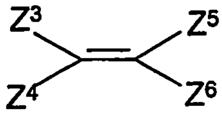

**(III.2)**

avec dans ces formules (III.1) et (III.2) :

$Z^1$, $Z^2$, $Z^3$, $Z^4$, $Z^5$, $Z^6$

- représentant indépendamment chacun :

  a. l'hydrogène,
  b. un halogène,
  c. un cyano,
  d. un groupe hydrocarboné électroattracteur saturé ou non saturé, de préférence adjacent à la double ou triple liaison,
  e. deux $Z^{1 à 6}$ vicinaux pouvant former ensemble un cycle électroattracteur avantageusement différent du carbène Lγ de formule (II) et comportant éventuellement des hétéroatomes (de préférence O, N, S);

- ou les substituants $Z^1$ et $Z^2$ forment ensemble, dans (III.1), un radical monovalent alcényle comportant au moins un reste électroattracteur de préférence adjacent à la triple liaison;
- ou bien encore $Z^3$ à $Z^6$ forment deux à deux, dans (III.2), un radical monovalent alcényle comportant au moins un reste électroattracteur de préférence adjacent à la double liaison;

→ ou forment ensemble le ligand Lδ de formule (IV) :

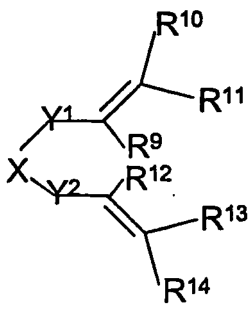

**(IV)**

dans laquelle :

❖ $Y_1$ et $Y_2$ représentent indépendamment l'un de l'autre $CR_aR_b$ ou $SiR_cR_d$;
❖ X représente O, $NR_e$ ou $CR_fR_g$ ;
❖ $R^{10}$, $R^{11}$, $R^{13}$ et $R^{14}$, identiques ou différents, sont choisis parmi un atome d'hydrogène, un groupe alkyle et un groupe aryle éventuellement substitué par alkyle ;
❖ $R^9$, $R^{12}$, $R_a$, $R_b$ ét $R_e$ sont indépendamment choisis parmi un atome d'hydrogène ; un groupe alkyle ; acyle ; aryle éventuellement substitué par alkyle ; cycloalkyle éventuellement substitué par

alkyle ; et arylalkyle dans lequel la partie aryle est éventuellement substitué par alkyle ;

❖ $R_c$ et $R_d$ sont indépendamment choisis parmi alkyle ; aryle éventuellement substitué par alkyle ; cycloalkyle éventuellement substitué par alkyle ; et arylalkyle dans lequel la partie aryle est éventuellement substituée par alkyle ; ou bien

❖ lorsque $Y_1$ et $Y_2$ représentent indépendamment $SiR_cR_d$, deux groupes $R_c$ liés à deux atomes de silicium distincts forment ensemble une chaîne de formule :

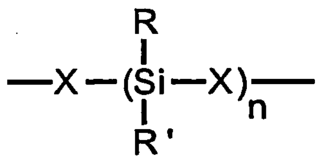

dans laquelle n est un entier de 1 à 5 ; X est tel que défini ci-dessus ; R et R', identiques ou différents, prennent l'une quelconque des significations données ci-dessus pour $R_c$ ou $R_d$ ; ou bien lorsque $Y_1$ et $Y_2$ représentent indépendamment $SiR_cR_d$, deux groupes $R_c$ liés à des atomes de silicium distincts forment ensemble une chaîne hydrocarbonée saturée, les deux groupes $R_c$ ensemble avec lesdits atomes de silicium et X formant un cycle de 6 à 10 chaînons ; ou bien

❖ lorsque $Y_1$ et $Y_2$ représentent indépendamment $CR_aR_b$, deux groupes $R_a$ liés à des atomes de carbone distincts forment ensemble une chaîne hydrocarbonée saturée, les deux groupes $R_a$ ensemble avec les atomes de carbone qui les portent et X forment un cycle de 6 à 10 chaînons ; et

❖ $R_f$ et $R_g$ représentent indépendamment l'un de l'autre un atome d'hydrogène ; un groupe alkyle; acyle; aryle éventuellement substitué par alkyle; cycloalkyle éventuellement substitué par alkyle; arylalkyle dans lequel la partie aryle est éventuellement substituée par alkyle ; un atome d'halogène ; un groupe alcényle ; un groupe alcynyle ; ou un groupe $SiG_1G_2G_3$ ou $G_1$, $G_2$ et $G_3$ sont indépendamment l'un de l'autre alkyle ; alkoxy ; aryle éventuellement substitué par alkyle ou alkoxy ; ou arylalkyle dans lequel la partie aryle est éventuellement substituée par alkyle ou alkoxy ;

b) une association de (a) avec au moins un autre complexe du platine sélectionné parmi les complexes : du platine au degré d'oxydation zéro, du platine au degré d'oxydation +2 ou du platine au degré d'oxydation +4.

Les compositions C contenant en plus l'additif stabilisant conforme à la présente invention durcissent pour conduire à des élastomères dont la dégradation sous l'effet de très hautes températures est bien moindre par rapport à ce qui se passe avec les stabilisants à base de platine de l'art antérieur et en particulier avec les plus efficaces d'entre eux consistant dans le platine de Karstedt et l'acide chloroplatinique anhydre.

On entend notamment par « très haute températures » des températures supérieures à 500 °C, préférentiellement supérieures à 800°C. On peut notamment considérer comme de très hautes températures, des températures par exemple supérieures à 200°C, voir 250°C, lorsque le temps de séjour à ces températures est prolongé, par exemple supérieur à 200 heures, préférentiellement supérieur à 240 heures.

COMPOSES PARTICULIERS DU PLATINE

On complète ci-après la définition des complexes a) du platine de formule (I).

Par alkyle, on désigne une chaîne hydrocarbonée saturée, linéaire ou ramifiée, éventuellement substituée (e.g. par un ou plusieurs alkyles), de préférence de 1 à 10 atomes de carbone, par exemple de 1 à 8 atomes de carbone, mieux encore de 1 à 7 atomes de carbone.

Des exemples de groupes alkyle sont notamment méthyle, éthyle, isopropyle, n-propyle, tert-butyle, isobutyle, n-butyle, n-pentyle, isoamyle et 1,1-diméthylpropyle.

La partie alkyle du radical alcoxy est telle que définie ci-dessus.

Par cycloalkyle, on entend un radical hydrocarboné saturé mono- ou polycyclique, de préférence mono- ou bicyclique, présentant préférablement de 3 à 10 atomes de carbone, mieux encore de 3 à 8. Par radical hydrocarboné saturé polycyclique, on entend un radical présentant deux ou plusieurs noyaux cycliques rattachés les uns aux autres par des liaisons σ ou/et condensés deux à deux.

Des exemples de groupes cycloalkyle polycycliques sont adamantane et norbornane.

Des exemples de groupes cycloalkyle monocycliques sont cyclopropyle, cyclobutyle, cyclopentyle, cyclohexyle, cycloheptyle et cyclooctyle.

Par alkyle perfluoré, on désigne un alkyle comprenant au moins un groupe perfluoroalkyle, ayant de préférence

pour formule :

$$-(CH_2)_p-C_qF_{2q+1}$$

dans laquelle p représente 0, 1, 2, 3 ou 4 ; q est un entier de 1 à 10 ; et $C_qF_{2q+1}$ est linéaire ou ramifié. Des exemples préférés de ce radical sont : $-(CH_2)_2-(CF_2)_5-CF_3$ et $-(CF_2)_7-CF_3$.

L'expression aryle désigne un groupe hydrocarboné aromatique, ayant de 6 à 18 atomes de carbone, monocyclique ou polycyclique et de préférence monocyclique ou bicyclique. Il doit être entendu que, dans le cadre de l'invention, par radical aromatique polycyclique, on entend un radical présentant deux ou plusieurs noyaux aromatiques, condensés (orthocondensés ou ortho et péricondensés) les uns aux autres, c'est-à-dire présentant, deux à deux, au moins deux carbones en commun.

Ledit groupe hydrocarboné aromatique ("aryle") est éventuellement substitué par exemple par un ou plusieurs alkyles en $C_1$-$C_3$, un ou plusieurs radicaux hydrocarbonés halogénés (e.g. $CF_3$), un ou plusieurs alcoxy (e.g. $CH_3O$) ou un ou plusieurs radicaux hydrocarbonés comprenant un ou plusieurs motifs cétone (e.g. $CH_3CO$-).

A titre d'exemple d'aryle, on peut mentionner les radicaux phényle, naphtyle, anthryle et phénanthryle.

L'expression arylalkyle désigne un groupe alkyle tel que défini ci-dessus, substitué par un ou plusieurs groupes aryle sur sa chaîne hydrocarbonée, le groupe aryle étant tel que défini ci-dessus. Des exemples en sont benzyle et triphénylméthyle.

Par acyle, on entend un groupe $R^o$-CO- où $R^o$ représente un alkyle tel que défini ci-dessus ; ou bien un groupe Ar-CO- où Ar représente un groupe aryle tel que défini ci-dessus, ou bien un arylalkyle dans lequel "aryle" et "alkyle" sont tels que définis ci-dessus et dans lequel la partie aryle est éventuellement substituée e.g. par un alkyle.

Par alcényle, on entend une chaîne hydrocarbonée insaturée, linéaire ou ramifiée, substituée ou non, présentant au moins une double liaison oléfinique, et plus préférablement une seule double liaison. De préférence, le groupe alcényle présente de 2 à 8 atomes de carbone, mieux encore de 2 à 6. Cette chaîne hydrocarbonée comprend éventuellement au moins un hétéroatome tel que O,N,S.

Des exemples préférés de groupes alcényle sont les groupes allyle et homoallyle.

Par alcynyle, on entend selon l'invention, une chaîne hydrocarbonée insaturée, linéaire ou ramifiée, substituée ou non, présentant au moins une triple liaison acétylénique, et plus préférablement une seule triple liaison. De préférence, le groupe alcynyle présente de 2 à 8 atomes de carbone, mieux encore de 2 à 6 atomes de carbone. A titre d'exemple, on peut citer le groupe acétylényle, ainsi que le groupe propargyle. Cette chaîne hydrocarbonée comprend éventuellement au moins un hétéroatome tel que O,N,S.

L'expression "ne représente rien" signifie que les substituants $-T_3$, respectivement - $T_4$, sont inexistants. En effet, dans la formule (II), l'atome d'azote est trivalent, de telle sorte que lorsque A ou B représente N, l'atome d'azote ne peut présenter de substituant supplémentaire.

De préférence, dans les ligands carbène de formule (II) :

- ► $T_3$ et $T_4$ représentent un atome d'hydrogène ou forment ensemble un phényle,
- ► et/ou $T_1$ et $T_2$, identiques ou différents, représentent ($C_1$-$C_8$)alkyle ou ($C_3$-$C_8$)cycloalkyle, de préférence dans le groupe de radicaux comprenant : méthyle, n-propyle, n-pentyle, néo-pentyle ($-CH_2-C(CH_3)_3$), cyclopentyle, cyclohexyle, adamantyle, allyle ($-CH_2-CH=CH_2$), méthallyle ($-CH_2-C(CH_3)=CH_2$), propargyle, homopropargyle ($-(CH_2)_2-C\equiv CH$), ou

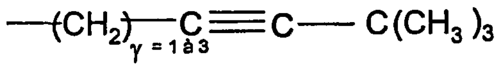

ou

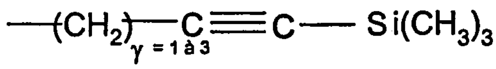

ou bien encore : $-(CH_2)\gamma_{=1\ à\ 4}$-amine (par exemple $N(CH_3)_2$)
ou $-(CH_2)\gamma_{=1\ à\ 4}$-alcoxy (par exemple $O(CH_3)_2$);

- ► et/ou A et B représentent tous deux un atome de carbone.

Selon une variante, les carbènes de formule (II) correspondant au ligand Lγ, peuvent présenter au moins deux noyaux condensés, c'est-à-dire que deux substituants au moins parmi $T_1$, $T_2$, $T_3$ et $T_4$, situés sur deux sommets adjacents,

forment ensemble une chaîne hydrocarbonée saturée ou insaturée, présentant de préférence de 3 à 6 atomes de carbone. Par chaîne hydrocarbonée saturée ou insaturée, on entend une chaîne hydrocarbonée linéaire ou ramifiée pouvant présenter ou non une ou plusieurs insaturations de type double liaison oléfinique ou triple liaison acétylénique.

Lorsque les carbènes (II) présentent deux noyaux condensés, ils répondent donc à l'une des formules suivantes, dans lesquelles (alk) représente une chaîne hydrocarbonée saturée ou insaturée :

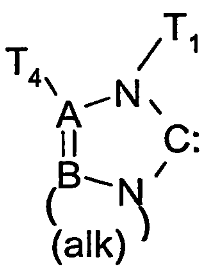
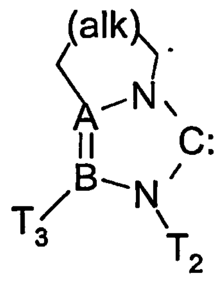
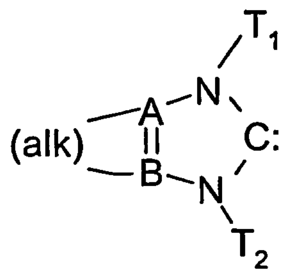

Les ligands Lα et Lβ produit de formule (I), peuvent représenter indépendamment un alcynyle de formule (III. 1) ou un alcényle de formule (III.2) substitué par des radicaux $Z^1$ à $Z^6$ porteurs d'au moins un motif électroattracteur , actif vis à vis de l'insaturation π de Lα et Lβ, pour promouvoir le ligandage avec le platine du complexe.

Avantageusement, dans les formules (III.1) et (III.2), les restes électroattracteurs sont choisis dans le groupe comprenant :

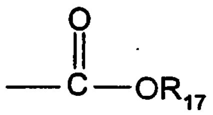 ; 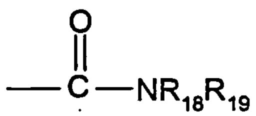 ; 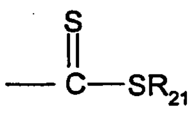 ; 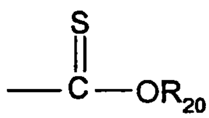 ; $-C_{n'}F_{2n'}$.

dans laquelle : $R_{17}$, $R_{18}$, $R_{19}$, $R_{20}$ est un alkyle, un alcényle, un alcynyle ou un trialkylsilyle substitué ou non, et n' compris entre 1 et 50.

A titre d'exemples de radicaux $Z^1$ à $Z^6$, on peut citer :

- ❖ ceux sélectionnés dans le groupe comprenant: -CN, $-COOCH_3$, $-COOCH_2CH_3$, $-CONC_{12}H_{25}$, $-COO-CH_2-CH=CH_2$,
- ❖ et dans les cas où les substituants $Z^1$ et $Z^2$ forment deux à deux et avec la triple liaison, dans (III.1), un cycle Cy1 et où $Z^3$ à $Z^6$ forment deux à deux, avec ou sans la double liaison, dans (III.2), un cycle Cy2, ces cycles Cy1 et Cy2 sont indépendamment et de préférence, choisis dans le groupe comprenant les cycles suivants :

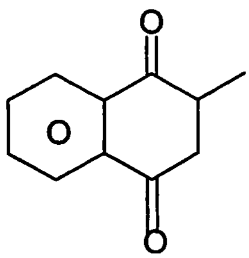 ; 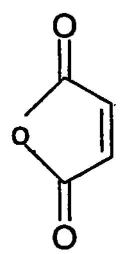

Lorsque Lα et Lβ forment ensemble un ligand Lδ de formule (IV), ce dernier est de préférence du type de ceux dans lesquels $Y_1$ et $Y_2$ représentent, soit tous les deux $CR_aR_b$, soit tous les deux $SiR_cR_d$, de telle sorte que lesdits complexes ont, soit pour formule (IV.1), soit pour formule (IV.2) :

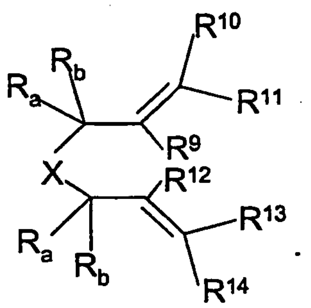

(IV.1)

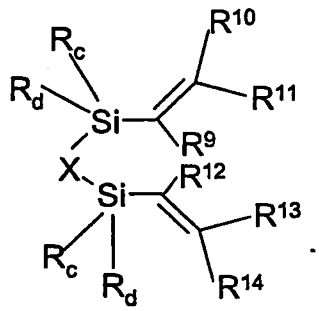

(IV.2)

où:
les deux $R_a$, les deux $R_b$, les deux $R_c$ et les deux $R_d$. sont identiques entre eux, et $R^9 = R^{12}$ ; $R^{10} = R^{14}$ ; et $R^{11} = R^{13}$.

Selon une variante, les deux $R_c$ dans (IV.2) forment ensemble :

(a) soit une chaîne

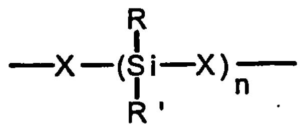

dans laquelle n est un entier de 1 à 5 ; X est tel que défini ci-dessus; et R et R', identiques ou différents, prennent l'une quelconque des significations données ci-dessus pour $R_c$ ou $R_d$ ;

(b) soit une chaîne hydrocarbonée saturée, de telle sorte que les deux substituants $R_c$, ensemble avec les deux atomes de silicium qui les portent et X, forment un cycle de 6 à 10 chaînons, de préférence de 6 à 8 chaînons.

Lorsque les deux $R_c$ forment la chaîne (a) dans (IV.2), on préfère que n valle 1 ou 2 et que $R = R_d$, les deux groupes $R_d$ portés par les deux atomes de silicium étant identiques. En ce cas, $R_d$ représente préférablement alkyle, par exemple méthyle. Mieux encore, dans ces composés, R' représente $-CR^{12}=CR^{13}R^{14}$; $R^{13} = R^{11}$; $R^{10} = R^{14}$; et $R^{12} = R^9$.

Dans ce cas, on préfère que X représente O dans (IV.2). Le ligand Lδ a alors pour formule :

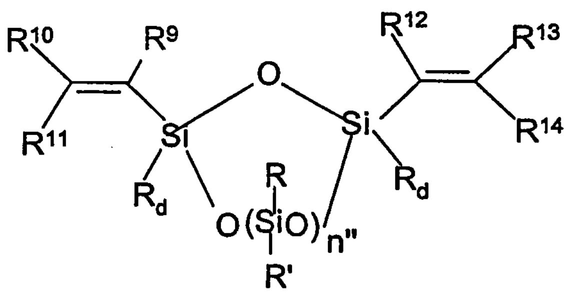

(IV.2.2)

Parmi ces composés, on préfère que les deux $R_d$ soient identiques. et avantageusement représente alkyle (par exemple méthyle).

De façon préférée, n vaut 1 ou 2 et $R = R_d$, étant entendu que lorsque n vaut 2, un seul atome de silicium de la chaîne $O-(SiRR'-O)_n-$ peut être substitué par un ou deux groupes alcényle ou alcynyle. Mieux encore, $R' = -CR^{12}=CR^{13}R^{14}$ et $R^{13} = R^{11}$; $R^{10} = R^{14}$ ; et $R^{12} = R^9$.

Lorsque les deux $R_c$ forment ensemble avec les deux atomes de silicium et le groupe X, la chaîne (b), on préfère que les deux groupes $R_c$, soient un cycle à 8 chaînons. En ce cas, on préfère que les deux $R_d$ soient identiques. Le ligand Lδ a alors pour formule:

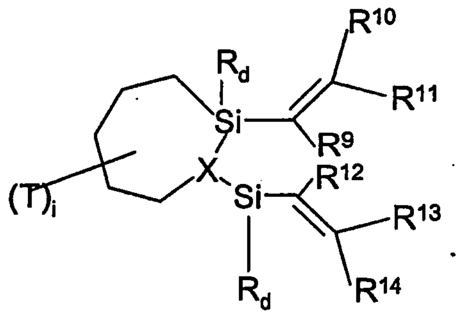

(IV.2.3)

où T représente alkyle, i est un nombre entier compris entre 0 et 5, T étant situé sur un ou plusieurs des sommets 1, 2, 3, 4 et 5 de la formule ci-dessus.

De la même façon, lorsque $Y_1$ et $Y_2$ représentent $CR_aR_b$ dans (IV.1), les deux groupes $R_a$ liés à des atomes de carbone distincts peuvent former ensemble une chaîne hydrocarbonée saturée (c), de telle sorte que les deux groupes $R_a$ ensemble avec les carbones qui les portent et X forment un cycle de 6 à 10 chaînons. De préférence, le cycle formé est un cycle à 8 chaînons, auquel cas le ligand Lδ a alors pour formule:

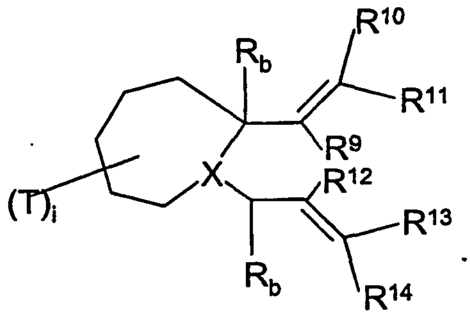

(IV.1.1)

où T représente alkyle ; i est un nombre entier compris entre 0 et 5, T étant situé sur un ou plusieurs des sommets 1, 2, 3, 4 et 5 de la formule ci-dessus.

Lorsque $R_f$ et/ou $R_g$ représente $SiG_1G_2G_3$, on préfère que $R_f$ et/ou $R_g$ soit trialkylsilyle, par exemple $SiG_1G_2G_3$ où $G_1 = G_2 = G_3$ = alkyle.

Des sous-groupes des ligands Lδ des complexes métalliques entrant dans la composition selon l'invention, sont constitués des complexes pour lesquels :

- X = O ; $Y_1$ et $Y_2$ représentent indépendamment $SiR_cR_d$ ; ou
- X = $NR_e$ ; $Y_1$ et $Y_2$ représentent indépendamment $CR_aR_b$ ; ou
- X = $NR_e$ ; $Y_1$ et $Y_2$ représentent indépendamment $SiR_cR_d$ ; ou
- X = $CR_fRg$ ; $Y_1$ et $Y_2$ représentent indépendamment $CR_aR_b$ ; ou
- X = $CR_fRg$ ; $Y_1$ et $Y_2$ représentent indépendamment $SiR_cR_d$.

Parmi ces ligands Lδ de formule (IV), on préfère ceux pour lesquels :

- lorsque X représente O, $Y_1$ et $Y_2$ représentent indépendamment $SiR_cR_d$ ; ou
- lorsque X représente $NR_e$, $Y_1$ et $Y_2$ représentent indépendamment $CR_aR_b$ ; ou
- lorsque X représente $CR_fR_g$, $Y_1$ et $Y_2$ représentent indépendamment $CR_aR_b$.

En pratique, X représente O et $Y_1$ et $Y_2$ représentent indépendamment $SiR_cR_d$ dans le ligand Lδ de formule (IV).

Dans le cadre de l'invention, l'expression "représentent indépendamment" signifie que les substituants désignés sont soit identiques soit différents.

Par exemple, $R^{10}$, $R^{11}$, $R^{13}$ et $R^{14}$ sont des atomes d'hydrogène dans les ligands Lδ de formule (IV).

Des significations préférées de $R^9$ et $R^{12}$ sont notamment un atome d'hydrogène ; un groupe alkyle ; aryle éventuellement substitué par alkyle ; et cycloalkyle éventuellement substitué par alkyle. Parmi ces significations préférées, il est particulièrement avantageux que $R^9$ et $R^{12}$, identiques, représentent un atome d'hydrogène ; ($C_3$-$C_8$)cycloalkyle ou ($C_1$-$C_8$)alkyle.

Par exemple, le ligand dioléfinique Lδ de formule (IV) est symétrique, c'est-à-dire que $R^{10} = R^{14}$ ; $R^{11} = R^{13}$ ; $R^9 = R^{12}$ et les deux groupes $Y_1$, $Y_2$ sont : soit strictement identiques entre eux, soit $Y_1 = CR_aR_b$ et $Y_2 = CR_aR_b$ où les deux $R_a$ forment ensemble une chaîne symétrique, soit encore $Y_1 = SiR_cR_d$ et $Y_2 = SiR_cR_d$ où les deux $R_c$ forment ensemble une chaîne symétrique.

Concernant le complexe du platine (a) selon l'invention, il convient de citer un premier groupe particulièrement préféré de complexes métalliques de formule (I.1) suivante :

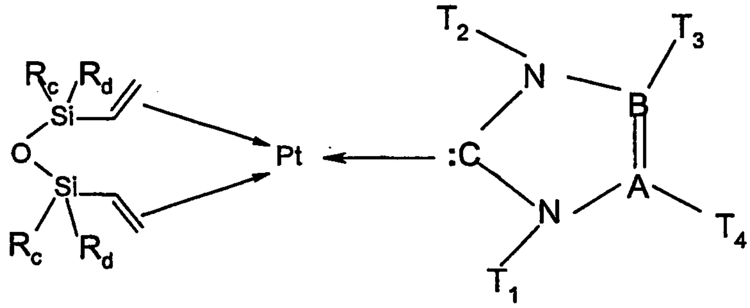

(I.1)

dans laquelle :

$T_1$ et $T_2$ sont identiques et sont tels que définis ci-dessus ;
$T_3$ et $T_4$ sont tels que définis ci-dessus ;
$R_c$ et $R_d$ sont tels que définis ci-dessus.

Un deuxième groupe particulièrement préféré de catalyseurs -C- de la composition selon l'invention comprend les complexes métalliques de formule (1.2) suivante :

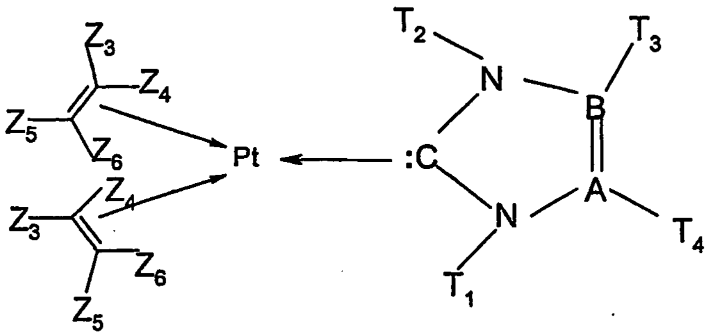

(I.2)

dans laquelle :

$T_1$ et $T_2$ sont identiques et sont tels que définis ci-dessus ;
$T_3$ et $T_4$ sont tels que définis ci-dessus ;
$R_c$ et $R_d$ sont tels que définis ci-dessus.

Un troisième groupe particulièrement préféré de complexes (a) selon l'invention comprend les complexes métalliques de formule (1.3) suivante :

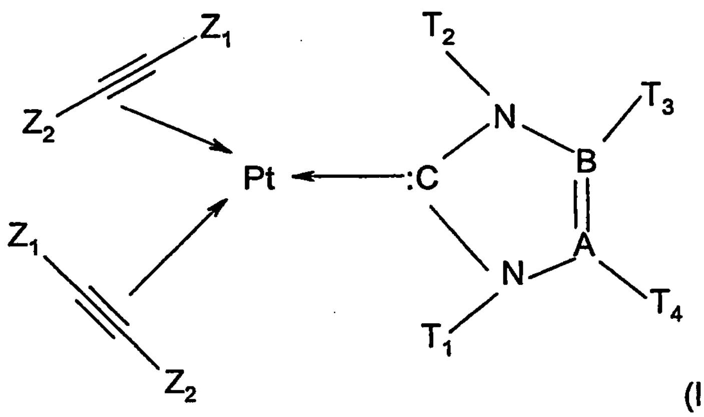

(I.3)

dans laquelle :

$T_1$ et $T_2$ sont identiques et sont tels que définis ci-dessus ;
$T_3$ et $T_4$ sont tels que définis ci-dessus ;
$R_c$ et $R_d$ sont tels que définis ci-dessus.

On évoque ci-après la préparation des complexes métalliques de formule (I). Pareils complexes peuvent être obtenus à partir de complexes (I) dans lesquels Lγ est de formule (II) et Lα et Lβ forment ensemble un ligand de formule (IV), ces derniers étant déplacés in situ par des composés de formule (III.1) ou (III.2).

Ces complexes (I) dans lesquels Lγ est de formule (II) et Lα et Lβ forment ensemble un ligand de formule (IV) sont préparés de façon conventionnelle, par exemple à partir de complexes connus de l'état de la technique par échange de ligand, c'est-à-dire par addition du carbène approprié de formule (II) à un complexe métallique du platine en solution, désigné complexe précurseur.

Des complexes précurseurs appropriés sont, par exemple, le complexe de Karstedt de formule :

$$Pt_2[ViMe_2Si\text{-}O\text{-}SiMe_2Vi]_3$$

dans laquelle Vi représente le radical vinyle.

Ces ligands sont soit disponibles dans le commerce, soit facilement préparés par l'homme du métier à partir de composés commerciaux. Pour plus de détails, on peut se reporter aux informations données dans WO-A-01/42258, en particulier aux pages 15 à 18 de ce document.

Les carbènes de formule (II) peuvent être préparés par déprotonation de sels d'imidazolium, de sels de tétrazolium, de sels de triazolium, ou de sels de pyrazolium suivant le cas, sous l'action d'une base.

Ces réactions peuvent être schématisées comme suit :

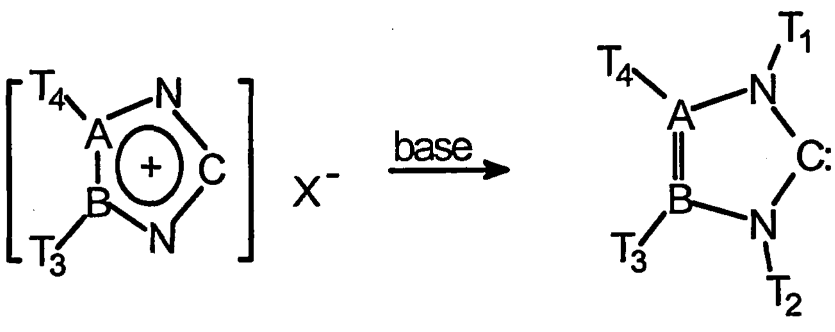


VIII.1 II.1

Dans ces schémas réactionnels, $T_1$, $T_2$, $T_3$, $T_4$, A et B sont tels que définis ci-dessus pour la formule I et $X^-$ représente un anion.

La nature de l'anion $X^-$ n'est pas critique selon l'invention. L'anion $X^-$ est l'anion dérivé d'un acide de Brönsted (acide protique) organique ou minéral. Habituellement, l'anion $X^-$ est dérivé d'un acide présentant un pKa inférieur à 6.

De préférence, $X^-$ dérive d'un acide de pKa inférieur à 4, mieux encore inférieur à 2. Les pKa dont il est question ici sont les pKa des acides tels que mesurés dans l'eau.

Des exemples d'acides sont : les acides carboxyliques comme l'acide acétique, l'acide benzoïque ou l'acide stéarique ; les acides sulfoniques comme l'acide benzène sulfonique ; et les acides phosphoniques comme l'acide phénylphosphonique.

Selon l'invention, on préfère plus particulièrement les anions $X^-$ dérivés des acides HF, HCl, HBr, HI, $H_2SO_4$, $HBF_4$ et $H_3PO_4$.

Les bases utilisables pour la déprotonation des sels de formules (VIII.1) sont des bases fortes choisies parmi les hydrures de métal alcalin, les hydroxydes de métal alcalin, les carboxylates de métal alcalin, les alcoolates de métal alcalin et les amidures de métal alcalin.

Des exemples de base appropriée sont donc l'hydrure de sodium, le méthylate de sodium, le tert-butylate de potassium, le diisopropylamidure de lithium et leurs mélanges.

La réaction de déprotonation est de préférence réalisée dans un solvant capable de dissoudre au moins partiellement le sel de départ de formule (VIII.1), ainsi que les autres réactifs.

La nature du solvant dépend également de la force de la base. En effet, dans le cas d'une base forte et de sels de départ particulièrement réactifs, il peut être nécessaire d'opérer à basse température.

Généralement, la température réactionnelle est comprise entre 40°C et -78°C, préférablement entre 30 et -50°C, mieux encore entre 25 et -40°C, par exemple entre 20 et -30°C.

Des solvants utilisables dans le procédé de préparation des carbènes sont les éthers cycliques ou non, tels que l'éther de diéthyle, l'éther de diisopropyle, le tétrahydrofuranne, le dioxanne, le diméthoxyéthane ou l'éther diméthylique du diéthylèneglycol.

Les méthodes de préparation des carbènes de formule (II) sont décrites dans WO-A-01/42258, en particulier aux pages 20 et 21.

Selon un mode de réalisation particulièrement préféré de l'invention, le complexe métallique de l'invention a pour formule :

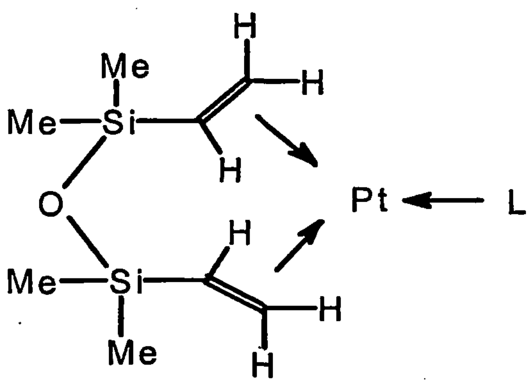

dans laquelle Lγ est tel que défini ci-dessus.

Une méthode simple de préparation de ce complexe consiste à faire réagir le carbène Lγ avec le catalyseur de Karstedt de formule moyenne $Pt_2[ViMe_2Si\text{-}O\text{-}SiMe_2Vi]_3$ dans laquelle Vi représente le radical vinyle.

Cette réaction peut être réalisée en masse ou dans un solvant.

Des exemples de solvants appropriés sont les éthers cycliques ou non, les amides et les hydrocarbures aromatiques.

La température de réaction varie habituellement entre 10 et 50°C, de préférence entre 15 et 35°C, très préférablement entre 20 et 25°C. Il est souhaitable d'opérer en présence d'un léger excès de carbène par rapport au platine.

Pour plus de détails sur les façons de procéder, on peut se reporter aux informations données dans WO-A-02/098971, en particulier aux pages 40 à 43 de ce document.

On complète ci-après la définition des autres complexes du platine mis en oeuvre dans le cas des associations b).

Un groupe préféré desdits autres complexes du platine comprend les espèces suivantes :

- l'acide hexachloroplatinique $H_2PtCl_6$ et ses dérivés ;
- les complexes de formule $(PtCl_2, \text{oléfine})_2$, l'oléfine du complexe représentant notamment l'éthylène, le propylène, le butylène, le cyclohexène, le styrène ; et
- les complexes du platine et d'organopolysiloxanes vinylés tels que notamment le catalyseur de Karstedt.

DEFINITIONS DES COMPOSITIONS SILICONES

Les compositions polyorganosiloxanes durcissables C visées dans le cadre de la présente invention, présentées en un seul ou en plusieurs emballage(s) (mono- ou multicomposants), renferment un constituant principal formé d'un ou plusieurs constituant(s) polyorganosiloxane(s), un catalyseur approprié et éventuellement un ou plusieurs composé (s) pris dans le groupe formé par notamment : les charges renforçantes ou semi-renforçantes ou de bourrage ou servant à adapter la rhéologie des compositions durcissables et les additifs auxiliaires habituellement utilisés dans ce domaine de la technique.

Les polyorganosiloxanes, constituants principaux des compositions C visées dans la cadre de l'invention, peuvent être linéaires, ramifiés ou réticulés, et comporter des radicaux hydrocarbonés et/ou des groupements réactifs consistant dans des groupements alkényles et des atomes d'hydrogène. A noter que les compositions polyorganosiloxanes sont amplement décrites dans la littérature et notamment dans l'ouvrage de Walter NOLL : "Chemistry and Technology of Silicones", Academic Press, 1968, 2ème édition, pages 386 à 409.

Plus précisément les polyorganosiloxanes, constituants principaux des compositions C visées dans le cadre de l'invention, sont constitués de motifs siloxyles de formule générale :

$$R_nSiO_{\frac{4-n}{2}} \qquad (V)$$

et/ou de motifs siloxyles de formule :

$$Z_xR_ySiO_{\frac{4-x-y}{2}} \qquad (VI)$$

formules dans lesquelles les divers symboles ont la signification suivante :

- les symboles R, identiques ou différents, représentent chacun un groupement de nature hydrocarbonée non hydrolysable, ce radical pouvant être :
  - ★ un radical alkyle, halogénoalkyle ayant de 1 à 5 atomes de carbone et comportant de 1 à 6 atomes de chlore et/ou de fluor,
  - ★ des radicaux cycloalkyles et halogénocycloalkyles ayant de 3 à 8 atomes de carbone et contenant de 1 à 4 atomes de chlore et/ou de fluor,
  - ★ des radicaux aryles, alkylaryles et halogénoaryles ayant de 6 à 8 atomes de carbone et contenant de 1 à 4 atomes de chlore et/ou de fluor,
  - ★ des radicaux cyanoalkyles ayant de 3 à 4 atomes de carbone ;
- les symboles Z, représentent chacun un atome d'hydrogène ou un groupe alkényle en $C_2$-$C_6$ ;
- n = un nombre entier égal à 0, 1, 2 ou 3 ;
- x = un nombre entier égal à 0, 1, 2 ou 3 ;
- y = un nombre entier égal à 0, 1, ou 2 ;
- la somme x + y se situe dans l'intervalle allant de 1 à 3.

A titre illustratif, on peut citer parmi les radicaux organiques R, directement liés aux atomes de silicium : les groupes méthyle ; éthyle ; propyle ; isopropyle ; butyle ; isobutyle ; n-pentyle ; t-butyle ; chlorométhyle ; dichlorométhyle ; α-chloroéthyle ; α,β-dichloroéthyle ; fluorométhyle ; difluorométhyle ; α,β-difluoroéthyle ; trifluoro-3,3,3 propyle ; trifluoro cyclopropyle ; trifluoro-4,4,4 butyle ; hexafluoro-3,3,4,4,5,5 pentyle ; β-cyanoéthyle ; γ-cyanopropyle ; phényle : p-chlorophényle ; m-chlorophényle ; dichloro-3,5 phényle ; trichlorophényle ; tétrachlorophényle ; o-, p- ou m-tolyle ; α,α,α-trifluorotolyle ; xylyles comme diméthyl-2,3 phényle, diméthyl-3,4 phényle.

Préférentiellement, les radicaux organiques R liés aux atomes de silicium sont des radicaux méthyle, phényle, ces radicaux pouvant être éventuellement halogénés ou bien encore des radicaux cyanoalkyle.

Les symboles Z sont des atomes d'hydrogène ou des groupes alkényles qui sont de préférence des groupes vinyles.

La nature du polyorganosiloxane et donc les rapports entre les motifs siloxyles (V) et (VI) et la répartition de ceux-ci est comme on le sait choisie en fonction du traitement de réticulation qui sera effectué sur la composition durcissable en vue de sa transformation en élastomère.

Les compositions polyorganosiloxanes C, bicomposantes ou monocomposantes, réticulant à température ambiante ou à la chaleur par des réactions de polyaddition, essentiellement par réaction de groupements hydrogéno-silylés sur des groupements alkényl-silylés, en présence d'un catalyseur métallique, généralement à base de platine, sont décrites par exemple dans les brevets US-A-3 220 972, 3 284 406, 3 436 366, 3 697 473 et 4 340 709. Les polyorganosiloxanes entrant dans ces compositions sont en général constitués par des couples à base d'une part d'un polysiloxane linéaire, ramifié ou réticulé constitué de motifs (VI) dans lesquels le reste Z représente un groupement alkényle en $C_2$ - $C_6$ et où x est au moins égal à 1, éventuellement associés à des motifs (V), et d'autre part d'un hydrogéno-polysiloxane linéaire, ramifié ou réticulé constitué de motifs (VI) dans lesquels le reste Z représente alors un atome d'hydrogène et où x est au moins égal à 1, éventuellement associés à des motifs (V).

Dans le cas des compositions C réticulant par des réactions de polyaddition appelées RTV, le (ou les) constituant (s) polyorganosiloxane(s) porteur(s) de groupements alkényl-silylés présentent avantageusement une viscosité à 25°C au plus égale à 10 000 mPa.s et, de préférence, comprise entre 200 et 5 000 mPa.s.

Dans le cas des compositions C réticulant par des réactions de polyaddition appelées LSR, le (ou les) constituant (s) polyorganosiloxane(s) porteur(s) de groupements alkényl-silylés ont une viscosité à 25°C supérieure à 1 000 mPa.s, se situant de préférence dans l'intervalle allant d'une valeur supérieure à 5 000 mPa.s à 200 000 mPa.s.

Dans le cas des compositions C réticulant par des réactions de polyaddition appelées EVC de polyaddition, le (ou les) constituant(s) polyorganosiloxane(s) porteur(s) de groupements alkényl-silylés ont une viscosité à 25°C supérieure à 300 000 mPa.s et, de préférence comprise entre 1 million de mPa.s et 30 millions de mPa.s et même davantage.

Dans les cas des compositions polyorganosiloxanes C appelées RTV, LSR ou EVC de polyaddition, le (ou les) constituant(s) polyorganosiloxane(s) porteur(s) de groupements hydrogéno-silylés ont généralement une viscosité à 25°C au plus égale à 10 000 mPa.s et, de préférence, comprise entre 5 et 1 000 mPa.s.

Il peut aussi s'agir encore de compositions C durcissables à température élevée sous l'action de péroxydes organiques. Le polyorganosiloxane ou gomme entrant dans de telles compositions appelées EVC est alors constitué essentiellement de motifs siloxyles (V), éventuellement associés à des motifs (VI) dans lesquels le reste Z représente un groupement alkényle en $C_2$ - $C_6$ et où x est égal à 1. De tels EVC sont par exemple décrits dans les brevets US-A-3 142 655, 3 821 140, 3 836 489 et 3 839 266.

Le constituant polyorganosiloxane de ces compositions EVC présente avantageusement une viscosité à 25°C au moins égale à 300 000 mPa.s et, de préférence, comprise entre 1 million et 30 millions de mPa.s et même davantage.

Les compositions durcissables C visées dans le cadre de l'invention peuvent comporter en outre - à côté du (ou des) constituant(s) polyorganosiloxane(s), du catalyseur et éventuellement du (ou des) additif(s) auxiliaire(s) - des charges renforçantes ou semi-renforçantes ou de bourrage ou servant à adapter la rhéologie, qui sont de préférence choisies parmi les charges siliceuses.

Les charges renforçantes sont généralement choisies parmi les silices de combustion et les silices de précipitation. Elles ont une surface spécifique, mesurée selon les méthodes BET, d'au moins 50 $m^2$/g, de préférence supérieure à 100 $m^2$/g, et une dimension moyenne des particules inférieure à 0,1 micromètre ($\mu$m).

Ces silices peuvent être incorporées de préférence telles quelles ou après avoir été traitées par des composés organosiliciques habituellement utilisés pour cet usage. Parmi ces composés, figurent les méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane. Lors de ce traitement, les silices peuvent accroître leur poids de départ jusqu'à un taux de 20 %, de préférence 10 % environ.

Les charges semi-renforçantes ou de bourrage ou servant à adapter la rhéologie ont une surface spécifique BET inférieure à 100 $m^2$/g et un diamètre moyen particulaire supérieur à 0,1 $\mu$m et sont choisies de préférence parmi le quartz broyé, les argiles calcinées, les terres de diatomées et la zircone.

On peut utiliser, quand on en a besoin, de 0,5 à 200 % en poids, de préférence de 1 à 150 % en poids de charge(s), par rapport au poids du (ou des) constituant(s) organopolysiloxane(s) des compositions C.

Des compositions polyorganosiloxanes C préférées dans le cadre de la présente invention sont celles, monocomposantes ou bicomposantes, réticulant à température ambiante ou à la chaleur par des réactions de polyaddition, appelées RTV, qui comprennent :

(a) 100 parties en poids d'au moins un polydiorganosiloxane choisi parmi les homopolymères et les copolymères linéaires présentant par molécule au moins 2 groupes vinyles liés à des atomes de silicium différents, situées dans la chaîne et/ou en bouts de chaîne, dont les autres radicaux organiques liés aux atomes de silicium sont choisis parmi les radicaux méthyle, éthyle et phényle, au moins 60 % molaire de ces autres radicaux (et de préférence la totalité de ces autres radicaux) étant des radicaux méthyle, et présentant une viscosité moyenne allant de 200 à 5 000 mPa.s à 25°C ;

(b) au moins un polyorganohydrogénosiloxane choisi parmi les homopolymères et les copolymères linéaires ou cycliques présentant par molécule en moyenne au moins 2 atomes d'hydrogène liés à des atomes de silicium différents et dont les radicaux organiques liés aux atomes de silicium sont choisis parmi les radicaux méthyle, éthyle et phényle, au moins 60 % molaire de ces radicaux (et de préférence la totalité de ces radicaux) étant des radicaux méthyle, et présentant une viscosité allant de 5 à 1 000 mPa.s à 25°C, le réactif (b) étant utilisé en quantité telle que le rapport molaire des fonctions hydrure de (b) sur les groupes vinyle de (a) est compris entre 1,0 et 10 ;

(c) une quantité catalytiquement efficace d'un catalyseur au platine ;

(d) 0 à 120 partie(s) en poids, de préférence de 0 à 100 parties en poids, de charge(s) siliceuse(s) pour 100 parties en poids de l'ensemble des polyorganosiloxanes (a) + (b).

Selon une variante de mise en oeuvre, jusqu'à 100 % en poids du réactif (a) est remplacé par une résine polyorganosiloxane comportant dans sa structure de 0,1 à 20 % en poids de groupe(s) vinyle(s), ladite structure présentant au moins deux motifs différents choisis parmi les motifs M (triorganosiloxyle), D (diorganosiloxyle), T(monoorganosiloxyle) et Q ($SiO_{4/2}$), l'un au moins de ces motifs étant un motif T ou Q, le (ou les) groupe(s) vinyle (s) pouvant être porté(s) par les motifs M, D et/ou T.

Le réactif (a) peut être avantageusement un polydiorganosiloxane linéaire dont la chaîne est constituée essentiellement de motifs (V) où n = 2, cette chaîne étant bloquée à chaque extrémité par un motif (VI) où Z = vinyle et où x = 1 et y = 2 .

Le réactif (b) peut être avantageusement : un polyorganohydrogénosiloxane linéaire, comportant dans sa structure au moins 3 atomes d'hydrogène liés au silicium, dont la chaîne est constituée essentiellement de motifs (VI) où Z = H et où x = y = 1, éventuellement associés à des motifs (V) où n = 2, cette chaîne étant bloquée à chaque extrémité par un motif (VI) où Z = H et où x = 1 et y = 2 ou par un motif (V) où n = 3 ; ou un mélange dudit polyorganohydrogénosiloxane avec un autre polyorganohydrogénosiloxane linéaire dont la chaîne est constituée essentiellement de motifs (V) où n = 2, cette chaîne étant bloquée à chaque extrémité par un motif (VI) où Z = H et où x = 1 et y = 2.

La quantité pondérale de catalyseur (c), calculée en partie en poids de platine-métal est généralement comprise entre 1 et 250 ppm, de préférence entre 2 et 100 ppm, basés sur le poids de l'ensemble des organosiloxanes (a) + (b).

D'autres compositions polyorganosiloxanes C préférées sont celles, monocomposantes ou bicomposantes, réticulant à la chaleur par des réactions de polyaddition, appelées compositions LSR. Ces compositions répondent aux définitions données ci-avant à propos des compositions préférées appelées RTV, sauf en ce qui concerne la viscosité du réactif polydiorganosiloxane vinylé (a) qui cette fois est supérieure à 1000 mPa.s et se situe de préférence dans l'intervalle allant d'une valeur supérieure à 5 000 mPa.s à 200 000 mPa.s.

D'autres compositions polyorganosiloxanes C préférées sont celles, monocomposantes ou bicomposantes, réticulant à la chaleur par des réactions de polyaddition, appelées compositions EVC de polyaddition, qui comprennent :

(a') 100 parties en poids d'au moins une gomme polydiorganosiloxane qui est un homopolymère ou copolymère linéaire présentant par molécule au moins 2 groupes vinyles liés à des atomes de silicium différents, situés dans la chaîne et/ou en bouts de chaîne, dont les autres radicaux organiques liés aux atomes de silicium sont choisis parmi les radicaux méthyle, éthyle, phényle, au moins 60 % molaire de ces autres radicaux (et de préférence la totalité de ces autres radicaux) étant des radicaux méthyle, et ladite gomme présentant une viscosité supérieure à 300.000 mPa.s à 25°C et de préférence d'au moins 1 million de mPa.s ;

(b') au moins un polyorganohydrogénosiloxane choisi parmi les homopolymères et les copolymères linéaires, cycliques ou en réseau présentant par molécule au moins 3 atomes d'hydrogène liés à des atomes de silicium différents et dont les radicaux organiques liés aux atomes de silicium sont choisis parmi les radicaux méthyle, éthyle, phényle, au moins 60 % molaire de ces radicaux (et de préférence la totalité de ces radicaux) étant des radicaux méthyle, et présentant une viscosité allant de 5 à 1 000 mPa.s à 25°C, le réactif (b') étant utilisé en quantité telle que le rapport molaire des fonctions hydrure de (b') sur les groupes vinyle de (a') est compris entre 0,4 et 10 et de préférence entre 1,1 et 7 ;

(c') une quantité catalytiquement efficace d'un catalyseur au platine ;

(d') 0,5 à 120 partie(s) en poids, de préférence de 1 à 100 parties en poids, de charge(s) siliceuse(s) pour 100 parties en poids de l'ensemble des polyorganosiloxanes (a') + (b').

La gomme (a') est constituée, le long de sa chaîne, de motifs (V) où n = 2, éventuellement associés à des motifs (VI) où Z = vinyle et où x = y = 1, et elle est bloquée à chaque extrémité de sa chaîne par un motif (VI) où Z = vinyle et où x = 1 et y = 2 ou par un motif (V) où n = 3.

De façon avantageuse, on met en oeuvre à titre de constituant (b'), au moins un polyorganohydrogénosiloxane linéaire dont la chaîne est constituée essentiellement de motifs (VI) où Z = H et où x = y = 1, éventuellement associés à des motifs (V) où n = 2, cette chaîne étant bloquée à chaque extrémité par un motif (VI) où Z = H et où x = 1 et y = 2 ou par un motif (V) où n = 3.

La quantité pondérale de catalyseur (c'), exprimée en partie en poids de platine-métal par rapport au poids de la gomme (a') et du composé hydrogéno-silylé (b'), est comprise entre 1 et 250 ppm et, de préférence, entre 3 et 100 ppm.

D'autres compositions polyorganosiloxanes C préférées sont encore celles, monocomposantes, appelées EVC, comprenant :

(a") 100 parties en poids d'au moins une gomme polydiorganosiloxane qui est un homopolymère ou un copolymère linéaire présentant par molécule au moins 2 groupes vinyles liés à des atomes de silicium différents, situés dans la chaîne et/ou en bouts de chaîne, dont les autres radicaux organiques liés aux atomes de silicium sont choisis parmi les radicaux méthyle, éthyle, phényle, au moins 60 % molaire de ces autres radicaux (et de préférence la totalité de ces autres radicaux) étant des radicaux méthyle, et ladite gomme présentant une viscosité d'au moins 300 000 mPa.s à 25°C, et de préférence d'au moins 1 million de mPa.s ;

(b") 0,1 à 7 parties en poids d'un péroxyde organique ;

(c") 0,5 à 120 parties en poids, de préférence de 1 à 100 parties en poids, de charge(s) siliceuse(s) pour 100 parties en poids de gomme (a").

La gommes (a") peut être avantageusement : un polydiorganosiloxane linéaire dont la chaîne est constituée essentiellement de motifs (V) où n = 2, éventuellement associés à des motifs (VI) où Z = vinyle et où x = y = 1, et elle est bloquée à chaque extrémité de sa chaîne par un motif (VI) où Z = vinyle et où x = 1 et y = 2 ou un mélange dudit polydiorganosilxane avec un autre polydiorganosiloxane linéaire dont la chaîne est constitué essentiellement de motifs (V) où n = 2 et de motifs (VI) où z = vinyle et où x = y = 1, cette chaîne étant bloquée à chaque extrémité par un motif (V) où n = 3.

Les péroxydes organiques (b") sont utilisés à raison de 0,1 à 7 parties, de préférence 0,5 à 3 parties, pour 100 parties des gommes (a"). Ils sont bien connus des techniciens et comprennent plus spécialement le péroxyde de benzoyle, le péroxyde de dichloro-2,4 benzoyle, le péroxyde de dicumyle, le bis(t-butylperoxy)-2,5 diméthyl-2,5 hexane, le perbenzoate de t-butyle, le carbonate de péroxy t-butyle et d'isopropyle, le péroxyde de di-t-butyle, le bis(t-butylpéroxy)-1,1 triméthyl-3,3,5 cyclohexane.

La quantité de composé(s) particulier(s) du platine [additif(s) (a) + éventuellement (b)] utilisé(s) comme stabilisant, exprimée en partie en poids de platine élémentaire par rapport au poids total du (ou des) constituant(s) polyorganosiloxane(s) des compositions durcissables C [(a + b) ou (a' + b') ou (a")], se situe généralement dans l'intervalle allant de 1 à 250 ppm et, de préférence, de 2 à 100 ppm et, plus préférentiellement encore, de 3 à 70 ppm.

Dans le cas des compositions C de type RTV, LCR ou EVC de polyaddition, le stabilisant platine mis en oeuvre peut avantageusement servir en même temps, dans le cadre des quantités indiquées ci-avant, de catalyseur pour les réactions de polyaddition présidant à la réticulation des compositions durcissables C.

Les compositions silicones C, en plus des ingrédients [(a), (b), (c) et (d)], [(a'), (b'), (c') et (d')], [(a"), (b") et (c")] spécifiés ci-avant, contiennent éventuellement en outre additif(s) auxiliaire(s) (e) tels que notamment : au moins un produit dit "anti-structure" (e1) ; et/ou au moins une résine polysiloxane (e2) ; et/ou au moins un agent à base d'un sel, d'un hydroxyde ou d'un oxyde métallique (e3) ; et/ou au moins un pigment (e4) pour fabriquer des articles colorés ; et/ou au moins un composé à base de bore (e5) ; et/ou au moins une charge (e6) de type fondant et/ou de type lamellaire qui peut (peuvent) associé(s) ou non à une ou plusieurs espèce(s) minérale(s) appropriée(s) afin de donner naissance dans le cas d'un incendie à la formation d'une substance cendreuse isolante ; et/ou au moins un agent d'adhérence (e7) ; et/ou au moins un retardateur de réticulation (e8) dans le cas des compostions silicones C réticulant par des réactions de polyadditions appelées RTV, LCR ou EVC de polyaddition.

Plus précisément, le (ou les) additif(s) auxilliaire(s) (e), quand on en utilise un ou plusieurs, est (sont) représenté (s) par [pour 100 parties en poids de polymère(s) polyorganosiloxane(s) [(a + b) ou (a' + b') ou (a")] :

- 0,1 à 15 parties en poids d'un produit dit "antistructure" (e1) à base par exemple d'huile(s) polydiméthylsiloxane(s) de viscosité comprise entre 10 et 3000 mPa.s à 25°C et bloquée(s) à chaque extrémité de chaîne par des groupements hydroxy ou méthoxy et/ou d'huile(s) poly(méthylvinyl)siloxane de viscosité comprise entre 10 et 1000 mPa.s à 25°C et bloquée(s) à chaque extrémité de chaîne par des groupements hydroxy ou méthoxy et/ou d'huile(s) poly (méthylphényl)siloxane de viscosité comprise entre 10 et 1000 mPa.s à 25°C et bloquée(s) à chaque extrémité de chaîne par des groupements hydroxy ou méthoxy ; et/ou
- 0,1 à 5 parties de résine(s) polysiloxane(s) (e2) représentée(s) par : des résines dites MQ comprenant essentiellement des unités $R'''_3SiO_{0,5}$ et $SiO_2$ dans lesquelles R''' représente des groupements hydrocarbonés monovalents éventuellement halogénés ayant moins de 7 atomes de carbone, le rapport pondéral $R'''_3SiO_{0,5}$ sur $SiO_2$ étant compris entre 0,5/1 et 1/2/1 ; des résines M'Q comprenant essentiellement des unités $HR'''_2SiO_{0,5}$ et $SiO_2$ dans lesquelles R''' a la signification donnée ci-dessus, le rapport pondéral $HR'''_2SiO_{0,5}$ sur $SiO_2$ étant compris entre 0,5/1 et 10/1 ; et/ou
- 0,01 à 10 parties d'agent(s) (e3) tels que notamment : un sel métallique d'acide organique, comme un sel de fer ou

de cérium, par exemple l'octoate de fer ou de cérium (proportions allant plus spécifiquement de 0,01 à 1 partie) ; un oxyde de cérium, un hydroxyde de cérium, un oxyde de titane, un oxyde de fer (proportions allant plus spécifiquement de 0,1 à 10 parties) ; l'oxyde CaO, l'oxyde MgO (proportions allant plus spécifiquement de 0,01 à 0,4 parties) ; la zircone ; l'alumine hydratée ou non ; et/ou

- 0,01 à 5 parties de pigment(s) coloré(s) (e4) ; et/ou
- 0,01 à 3 parties de composé(s) (e5) à base de bore, comme l'acide borique et ses dérivés, par exemple du type ester d'alkyle ayant de 1 à 3 atomes de carbone ; et/ou
- 0,2 à 30 parties d'une charge (e6) de type fondant comme par exemple le ZnO et/ou de type lamellaire comme par exemple le mica, associé éventuellement à un oxyde métallique $TiO_2$ et/ou une wollastonite ; et/ou
- 0,01 à 2 parties d'un agent d'adhérence (e7) choisi par exemple parmi les composés organosiliques portant à la fois (1) des groupes hydrolysables liés à l'atome de silicium et (2) des groupes organiques substitués par des radicaux choisis dans le groupe des radicaux isocyanato, époxy, alkényle, isocyanurate et (méth)acrylate ; et/ou
- 0,005 à 5 parties, de préférence de 0,01 à 3 parties d'un retardateur de réticulation (e8) choisi par exemple parmi : les amines organiques, les silazanes, les oximes organiques, les diesters de diacides carboxyliques, les cétones acétyléniques et surtout, et il s'agit là des inhibiteurs préférés, les alcools acétyléniques (cf. par exemple FR-A-1 528 464, 2 372 874 et 2 704 553) et les polydiorganosiloxanes cycliques constitués essentiellement de motifs (VI) où Z = vinyle et où x = y = 1, éventuellement associés à des motifs (V) où n = 2.

C'est ainsi que les compositions polyorganosiloxanes C contenant en plus l'additif stabilisant peuvent être des compositions monocomposantes, c'est-à-dire livrées dans un seul emballage ; si la composition doit être stockée avant son utilisation, il peut être souhaitable d'ajouter, dans le cas des compositions RTV, LSR et EVC de polyaddition, une quantité efficace d'un inhibiteur (dont on a parlé ci-avant) de l'action catalytique du platine qui disparaît par chauffage lors de la réticulation de la composition. Ces compositions C contenant en plus l'additif stabilisant peuvent être aussi des compositions bicomposantes, c'est-à-dire livrées dans deux emballages distincts, dont un seul d'entre eux comporte le catalyseur de réticulation ; pour l'obtention de l'élastomère, on mélange le contenu des deux emballages et la réticulation a lieu grâce au catalyseur. De pareilles compositions monocomposantes et bicomposantes sont bien connues de l'homme de métier.
La réticulation des compositions durcissables C contenant en plus l'additif stabilisant pour l'obtention des élastomères peut être effectuée d'une manière connue en soi à la température ambiante (23°C) ou à des températures allant par exemple de 40°C à 250°C selon le type de la composition (RTV, LSR, EVC de polyaddition ou EVC) mise en oeuvre.
Les exemples suivants sont donnés à titre illustratif et ils ne peuvent pas être considérés comme une limite de la portée de l'invention.

**Exemples 1 à 5 :**

1 - Préparation du carbène de formule :

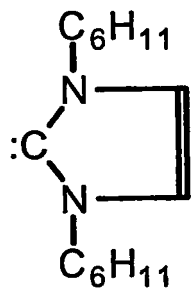

(cf. Chem. Eur. J. 1996, 2, 1627).
Pour cette réaction, toute la verrerie utilisée est séchée à l'étuve à 150° C pendant une nuit puis refroidie sous argon.
Le THF est distillé sur sodium/benzophénone juste avant utilisation.
Un tricol de 100 ml est chargé avec 2,70 g (10 mmol) de chlorure de 1,3-dicyclohexylimidazolinium puis purgé par un courant d'argon avant d'être mis en suspension dans 20 ml de THF. Environ 50 ml d'ammoniac sont ensuite condensés à - 78° C dans le tricol entraînant la dissolution partielle du sel. Le bain acétone/carboglace est retiré et 270

mg de NaH à 95% (10,7 mmol - 1,07 éq.) sont ajoutés lentement à l'aide d'une ampoule à solide. Chaque addition de NaH est suivie par un dégagement gazeux important ($H_2$) et le sel en suspension se dissout progressivement. Le mélange réactionnel est agité pendant 1 h30 au reflux du solvant. L'ammoniac est ensuite évaporé et une solution jaune pâle est obtenue ainsi qu'un solide en suspension (NaCl). Cette solution dont la concentration en carbène est de 0,5M dans le THF est utilisée immédiatement pour la préparation des complexes.

2 - Préparation du complexe platine-carbène de formule :

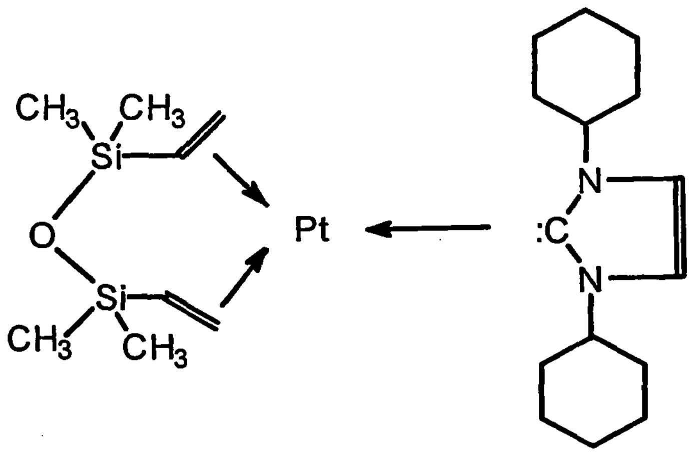

*(C1)*

On prépare une solution de Karstedt à 10% en poids en platine (soit 1,52 mmol de platine) conformément à la procédure décrite dans US 3 775 452.

A 3 g de cette solution, maintenue sous agitation et diluée dans 10 ml de tétrahydrofuranne, on ajoute goutte à goutte à l'aide d'une ampoule à brome, 3,2 ml d'une solution 0,5 M du carbène de formule :

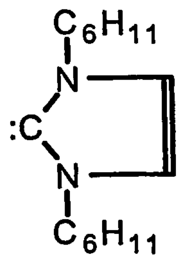

dans le tétrahydrofurane. L'addition est complète au bout de 10 minutes. Le mélange réactionnel est ensuite agité pendant 50 minutes à température ambiante. Le cas échéant, le léger insoluble est filtré et le mélange réactionnel est concentré sous vide.

Après concentration, un résidu visqueux légèrement jaune est obtenu. En quelques heures, un solide blanc abondant précipite dans le divinyltétraméthyldisiloxane résiduel. Celui-ci est filtré, lavé par quelques millilitres d'hexaméthyldisiloxane, puis de pentane. On obtient ainsi 570 mg (rendement 60%) d'une poudre blanche analytiquement pure.

Une fraction de cette poudre est recristallisée dans un mélange dichlorométhane/éthanol absolu. Les cristaux résultants sont analysés par diffraction des rayons X. L'analyse confirme la structure du complexe obtenu.

3. <u>Préparation de la composition silicone :</u>

Dans un pétrin malaxeur à bras en Z, on mélange à température ambiante (23°C) :

- 92 parties en poids d'un polydiméthylsiloxane bloqué à chacune de ses extrémités par un motif diméthylvinylsiloxy,

contenant 450 ppm de groupements terminaux diméthylvinylsiloxy ;

- 8 parties en poids d'un poly(diméthyl)(méthylvinyl)siloxane bloqué à chacune de ses deux extrémités par un motif triméthylsiloxy, contenant dans la chaîne 76 000 ppm de groupes méthylvinylsiloxy, ayant une viscosité de 400 000 mPa.s à 25°C ;
- 3,3 parties en poids d'une huile polydiméthylsiloxane bloquée à ses deux extrémités par des motifs diméthylhydroxysiloxy, contenant 8,5 % en poids d'OH, de viscosité 50 mPa.s à 25°C ;
- 33 parties en poids de silice de combustion ayant une surface spécifique de 150 $m^2/g$ ; et
- 0,3 partie en poids de chaux vive pulvérulente.

Après homogénéisation, le mélange obtenu est fractionné en plusieurs portions. Chacune des portions homogènes est ensuite travaillée sur un mélangeur à deux cylindres fonctionnant à température ambiante au moyen duquel on introduit :

- un composé du platine dont la nature et les proportions sont indiquées dans le tableau 1 ci-après (les proportions indiquées sont exprimées en ppm de platine métal rapporté au poids de la composition totale) ;
- 1,25 partie en poids de péroxyde de 2,4-dichlorobenzoyle à 50% en poids, pour 100 parties du mélange de la fraction homogène à réticuler.

Tableau 1

| Exemples Essais | COMPOSES DU PLATINE | | | |
|---|---|---|---|---|
| | Aucun | $H_2PtCl_6$ | Pt de Karstedt | Complexe Pt-Carbène(*) |
| Témoin 1 | 0 | 0 | 0 | 0 |
| Témoin 2 | 0 | 7 | 0 | 0 |
| Témoin 3 | 0 | 14 | 0 | 0 |
| Témoin 4 | 0 | 28 | 0 | 0 |
| Témoin 5 | 0 | 56 | 0 | 0 |
| Témoin 6 | 0 | 0 | 7 | 0 |
| Témoin 7 | 0 | 0 | 14 | 0 |
| Témoin 8 | 0 | 0 | 28 | 0 |
| Témoin 9 | 0 | 0 | 56 | 0 |
| Exemple 1 | 0 | 0 | 0 | 3,5 |
| Exemple 2 | 0 | 0 | 0 | 7 |
| Exemple 3 | 0 | 0 | 0 | 14 |
| Exemple 4 | 0 | 0 | 0 | 28 |
| Exemple 5 | 0 | 0 | 0 | 56 |
| (*) : complexe préparé selon le mode opératoire décrit dans les paragraphes 1 et 2 ci-avant. | | | | |

4. Caractérisation de la composition :

On procède à la vulcanisation de chaque fraction par pressage à chaud dans des moules appropriés permettant la réalisation de plaques échantillon de 2 mm d'épaisseur ; la vulcanisation est réalisée pendant 10 minutes à 115°C.

La résistance thermique est évaluée par la teneur en résidus à l'issue d'une analyse thermogravimétrique réalisée à l'aide d'une thermobalance TGA de Mettler ; on opère sur des morceaux de 20 mg prélevés dans des plaques échantillon, selon un protocole de montée en températures de 80°C par minutes jusqu'à 700°C ;

Les résultats obtenus sont reportés dans le tableau 2 donné ci-après :

Tableau 2 : pertes de masse en % en poids

| Exemples Essais | COMPOSES DU PLATINE | | | | Perte de masse en % en poids |
|---|---|---|---|---|---|
| | Aucun | $H_2PtCl_6$ | Pt de Karstedt | Complexe Pt-Carbène | |
| Témoin 1 | 0 | 0 | 0 | 0 | 68 |
| Témoin 2 | 0 | 7 | 0 | o | 63 |
| Témoin 3 | 0 | 14 | 0 | 0 | 61 |
| Témoin 4 | 0 | 28 | 0 | 0 | 50 |
| Témoin 5 | 0 | 56 | 0 | 0 | 47 |
| Témoin 6 | 0 | 0 | 7 | 0 | 57 |
| Témoin 7 | 0 | 0 | 14 | 0 | 45 |
| Témoin 8 | 0 | 0 | 28 | 0 | 46 |
| Témoin 9 | 0 | 0 | 56 | 0 | 41 |
| Exemple 1 | 0 | 0 | 0 | 3,5 | 38 |
| Exemple 2 | 0 | 0 | 0 | 7 | 32 |
| Exemple 3 | 0 | 0 | 0 | 14 | 29 |
| Exemple 4 | 0 | 0 | 0 | 28 | 28 |
| Exemple 5 | 0 | 0 | 0 | 56 | 27 |

Les résultats du tableau 2 ci-dessus montrent clairement la similitude des comportements enregistrés avec l'acide chloroplatinique et le platine de Karstedt, tandis que la dégradation est bien moindre, dès les plus faibles proportions, avec l'emploi du complexe platine-carbène.

**Exemples 6 et 7 :**

1. Préparation de la composition silicone :

Dans un mélangeur à turbine de laboratoire, on introduit :

- 74,8 parties en poids d'une suspension qui contient :
  - 14,96 parties en poids de silice de pyrogénation, développant une surface spécifique BET de 200 $m^2/g$, traitées en surface par de l'hexaméthydisilazane (selon les indications données dans le document WO-A-98/58997, pages 6 à 19) ;
  - 59,84 parties en poids d'une huile polydiméthylsiloxane bloquée à chacune des extrémités des chaînes par un motif diméthylvinylsiloxy, ayant une viscosité de 1600 mPa.s à 25°C ;
- 17,3 parties en poids d'un prémélange contenant : 40% en poids de quartz broyé ; 8% en poids d'oxyde de titane ; 0,3% en poids de méthacryloxypropyltriméthoxysilane dans une huile polydiméthylsiloxane bloquée à chacune des extrémités des chaînes par un motif diméthylvinylsiloxy ayant une viscosité de 2000 mPa.s à 25°C ;
- 0,075 partie en poids de triméthyl-3, 7, 11 dodécyne-1 ol-3 ; et
- 6,85 parties en poids d'une huile poly(diméthyl)(hydrogénométhyl)siloxane bloquée à chacune des extrémités des chaînes par un motif hydrogénodiméthylsiloxy, ayant une viscosité de 25 mPa.s à 25°C et contenant au total 7,9% en poids de fonctions Si-H, dont 6% en poids de fonctions Si-H apportées par les motifs internes hydrogénométhylsiloxy.

Après homogénéisation, le mélange obtenu est fractionné en plusieurs portions. Dans chacune des portions homogènes on introduit à température ambiante un composé du platine dont la nature et les proportions sont indiquées dans le tableau 3 ci-après (les proportions indiquées sont exprimées en ppm de platine métal par rapport au poids de la composition totale) ;

Tableau 3

| Exemples Essais | COMPOSES DU PLATINE | | |
|---|---|---|---|
| | Aucun | Pt de Karstedt | Complexe Pt-Carbène(*) |
| Témoin 10 | 0 | 25 | 0 |
| Témoin 11 | 0 | 50 | 0 |
| Exemple 6 | 0 | 0 | 25 |
| Exemple 7 | 0 | 25 | 3,5 |
| (*) : complexe préparé selon le mode opératoire décrit dans les paragraphes 1 et 2 des exemples 1 à 5 précités. | | | |

2. Caractérisation de la composition :

On procède à la vulcanisation de chaque fraction de la manière suivante : après désaération, la fraction est coulée dans un moule approprié lui-même placé dans une étuve ventilée d'abord pendant 1 heure à 80°C puis pendant 1 autre heure à 120°C.

La résistance thermique est évaluée par la teneur en résidus à l'issue d'une analyse thermogravimétrique réalisée à l'aide d'une thermobalance TGA de Mettler ; on opère sur des morceaux de 20 mg prélevés dans des plaques échantillon, selon un protocole de montée en température de 20°C par minutes jusqu'à 700°C ;

Les résultats obtenus sont reportés dans le tableau 4 donné ci-après :

Tableau 4 : pertes de masse en % en poids

| Exemples Essais | COMPOSES DU PLATINE | | | Perte de masse en % en poids |
|---|---|---|---|---|
| | Aucun | Pt de Karstedt | Complexe Pt-Carbène | |
| Témoin 10 | 0 | 25 | 0 | 54 |
| Témoin 11 | 0 | 50 | 0 | 53 |
| Exemple 6 | 0 | 0 | 25 | 51 |
| Exemple 7 | 0 | 25 | 3,5 | 49 |

Une autre façon d'apprécier la stabilité thermique est de suivre l'évolution de dureté Shore A d'élastomère (caractéristique mesurée selon les conditions de la norme DIN 53505) à l'issue d'un recuit de 36 heures à 250°C. Le tableau 5 rassemble les résultats obtenus :

Tableau 5 :

| Exemples Essais | COMPOSES DU PLATINE | | | Augmentation de dureté en % |
|---|---|---|---|---|
| | Aucun | Pt de Karstedt | Complexe Pt-Carbène | |
| Témoin 10 | 0 | 25 | 0 | 33 |
| Témoin 11 | 0 | 50 | 0 | 37 |
| Exemple 5 | 0 | 0 | 25 | 26 |
| Exemple 6 | 0 | 25 | 3,5 | 27 |

Les résultats présentés dans les tableaux 4 et 5 montrent le bénéfice qu'il y a à utiliser le complexe carbènique du platine, pris seul ou en association avec le platine de Karsdetd.

## Revendications

**1.** Utilisation d'un additif stabilisant pour améliorer la résistance contre la dégradation des élastomères silicones sous

l'effet de très hautes températures de 500°C ou plus, lesdits elastomères silicones étant obtenus à partir d'une composition polyorganosiloxane C réticulant soit à température élevée sous l'action de péroxydes organiques, soit à température ambiante ou à la chaleur par des réactions de polyaddition en présence d'un catalyseur métallique, ledit additif stabilisant étant un composé choisi parmi le groupe constitué par :

a) au moins un complexe du platine sélectionné parmi les produits de formule (I) :

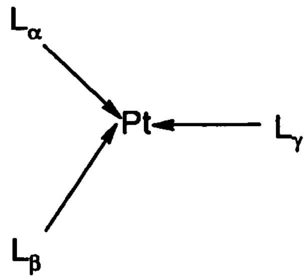

(I)

dans laquelle :

➢ $L_\gamma$ représente un carbène de formule (II) :

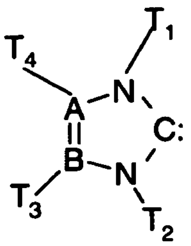

II

(II)

dans laquelle :

■ A et B représentent indépendamment C ou N, étant entendu que lorsque A représente N, alors $T_4$ ne représente rien et lorsque B représente N, alors $T_3$ ne représente rien ;
■ $T_3$ et $T_4$ représentent indépendamment un atome d'hydrogène ; un groupe alkyle ; cycloalkyle éventuellement substitué par alkyle ou alkoxy ; aryle éventuellement substitué par alkyle ou alkoxy; alcényle ; alcynyle; ou arylalkyle dans lequel la partie aryle est éventuellement substituée par alkyle ou alkoxy ; ou bien
■ $T_3$ et $T_4$ peuvent former ensemble et avec A et B quand ceux-ci représentent chacun un atome de carbone, un aryle ;
■ $T_1$ et $T_2$ représentent indépendamment un groupe alkyle ; un groupe alkyle éventuellement substitué par alkyle ; un groupe alkyle perfluoré ou éventuellement substitué par un groupe perfluoroalkyle ; cycloalkyle éventuellement substitué par alkyle ou alkoxy ; aryle éventuellement substitué par alkyle ou alkoxy ; alcényle ; alcynyle ; ou arylalkyle dans lequel la partie aryle est éventuellement substituée par alkyle ou alkoxy; ou bien
■ $T_1$ et $T_2$ représentent indépendamment un radical monovalent de formule (V) suivante :

$$V_1 — V_2 \qquad (V)$$

dans laquelle :

• $V_1$ est un radical divalent hydrocarboné,
• V2 est un radical monovalent choisi dans le groupe des substituants suivants:

♦ alcoxy, -OR° avec R° correspondant à alkyle, aryle,

♦ amine $N(R^o)_2$ avec $R^o$ correspondant à hydrogène, alkyle, aryle,

■ $T_1$ et $T_2$ représentent indépendamment un radical monovalent de formule (W) suivante :

$$W_1 — \omega — W_2 \qquad \textbf{(W)}$$

dans laquelle :

- $W_1$ est un radical divalent hydrocarboné,
- ω représente :

$-R^1C{=}CR^1-$ avec $A^1$ correspondant à H ou alkyle ou

$-C \equiv C-$

- $W_2$ est un radical monovalent choisi dans le groupe des substituants suivants :

♣ R2 = alkyle, H ;

♣ Si-alkyle ou Si-alcoxy,

♣ cétone,

♣ carboxy,

♣ amide,

♣ acyle,

■ ou bien encore les substituants $T_1$ $T_2$, $T_3$ et $T_4$ peuvent former deux à deux, lorsqu'ils sont situés sur deux sommets adjacents dans la formule (II), une chaîne hydrocarbonée saturée ou insaturée ;
➢ $L_\alpha$ et $L_\beta$ sont des ligands identiques ou différents entre eux et

→ représentent chacun :

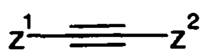

**(III.1)**

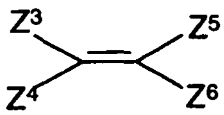

**(III.2)**

avec dans ces formules (III.1) et (III.2) :

$Z^1$, $Z^2$, $Z^3$, $Z^4$, $Z^5$, $Z^6$

- représentant indépendamment chacun :

f. l'hydrogène,
g. un halogène,
h. un cyano,
i. un groupe hydrocarboné électroattracteur saturé ou non saturé,
j. deux $Z^{1 à 6}$ vicinaux pouvant former ensemble un cycle électroattracteur différent du carbène Lγ de formule (II) et comportant éventuellement des hétéroatomes (de préférence O N, S);

• ou les substituants $Z^1$ et $Z^2$ forment ensemble, dans (III.1), un radical monovalent alcényle comportant au moins un reste électroattracteur ;
• ou bien encore $Z^3$ à $Z^6$ forment deux à deux, dans (III.2), un radical monovalent alcényle comportant au moins un reste électroattracteur ;

→ ou forment ensemble le ligand Lδ de formule (IV) :

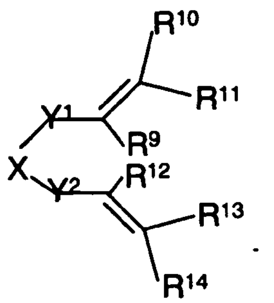

**(IV)**

dans laquelle :

❖ $Y_1$ et $Y_2$ représentent indépendamment l'un de l'autre $CR_aR_b$ ou $SiR_cR_d$ ;
❖ X représente O, $NR_e$ ou $CR_fR_g$ ;
❖ $R^{10}$, $R^{11}$, $R^{13}$ et $R^{14}$, identiques ou différents, sont choisis parmi un atome d'hydrogène, un groupe alkyle et un groupe aryle éventuellement substitué par alkyle ;
❖ $R^9$, $R^{12}$ , $R_a$, $R_b$ et $R_e$ sont indépendamment choisis parmi un atome d'hydrogène ; un groupe alkyle ; acyle ; aryle éventuellement substitué par alkyle ; cycloalkyle éventuellement substitué par alkyle ; et arylalkyle dans lequel la partie aryle est éventuellement substitué par alkyle ;
❖ $R_c$ et $R_d$ sont indépendamment choisis parmi alkyle ; aryle éventuellement substitué par alkyle ; cycloalkyle éventuellement substitué par alkyle ; et arylalkyle dans lequel la partie aryle est éventuellement substituée par alkyle ; ou bien
❖ lorsque $Y_1$ et $Y_2$ représentent indépendamment $SiR_cR_d$, deux groupes $R_c$ liés à deux atomes de silicium distincts forment ensemble une chaîne de formule :

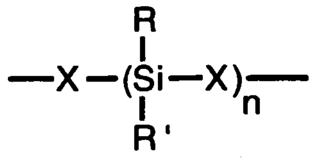

dans laquelle n est un entier de 1 à 5 ; X est tel que défini ci-dessus ; R et R', identiques ou différents, prennent l'une quelconque des significations données ci-dessus pour $R_c$ ou $R_d$ ; ou bien lorsque $Y_1$ et $Y_2$ représentent indépendamment $SiR_cR_d$, deux groupes $R_c$ liés à des atomes de silicium distincts forment ensemble une chaîne hydrocarbonée saturée, les deux groupes $R_c$ ensemble avec lesdits atomes de silicium et X formant un cycle de 6 à 10 chaînons ; ou bien
❖ lorsque $Y_1$ et $Y_2$ représentent indépendamment $CR_aR_b$, deux groupes $R_a$ liés à des atomes de carbone distincts forment ensemble une chaîne hydrocarbonée saturée, les deux groupes $R_a$ ensemble avec les atomes de carbone qui les portent et X forment un cycle de 6 à 10 chaînons ; et
❖ $R_f$ et $R_g$ représentent indépendamment l'un de l'autre un atome d'hydrogène ; un groupe alkyle; acyle; aryle éventuellement substitué par alkyle; cycloalkyle éventuellement substitué par alkyle; arylalkyle dans lequel la partie aryle est éventuellement substituée par alkyle ; un atome d'halogène ; un groupe alcényle ; un groupe alcynyle ; ou un groupe $SiG_1G_2G_3$ ou $G_1$, $G_2$ et $G_3$ sont indépendamment l'un de l'autre alkyle ; alkoxy ; aryle éventuellement substitué par alkyle ou alkoxy ; ou arylalkyle dans lequel la partie aryle est éventuellement substituée par alkyle ou alkoxy, et

b) une association de a) avec au moins un autre complexe du platine sélectionné parmi les complexes : du platine au degré d'oxydation zéro, du platine au degré d'oxydation +2 ou du platine au degré d'oxydation +4.

**2.** Utilisation selon la revendication 1, **caractérisée en ce que** dans les ligands carbène de formule (II) :

► $T_3$ et $T_4$ représentent un atome d'hydrogène ou forment ensemble un phényle,
► et/ou $T_1$ et $T_2$, identiques ou différents, représentent ($C_1$-$C_8$)alkyle ou ($C_3$-$C_8$)cycloalkyle, ou allyle (-$CH_2$-CH=$CH_2$) ou méthallyle (-$CH_2$-C($CH_3$)=$CH_2$) ou propargyle (-$(CH_2)_2$-C≡CH)
ou

$$-(CH_2)_{\gamma = 1\text{ à }3}-C\equiv C-C(CH_3)_3$$

ou

$$-(CH_2)_{\gamma = 1\text{ à }3}-C\equiv C-Si(CH_3)_3$$

ou -$(CH_2)_{\gamma=1\text{ à }4}$-amine
ou -$(CH_2)_{\gamma=1\text{ à }4}$-alcoxy ;
et/ou A et B représentent tous deux un atome de carbone.

**3.** Utilisation selon la revendication 1 ou 2, **caractérisée en ce que** dans les formules (III.1) et (III.2), les restes électroattracteurs sont choisis dans le groupe comprenant :

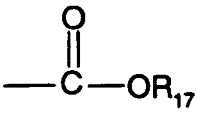 ; 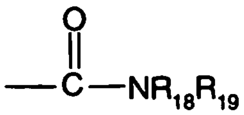 ; 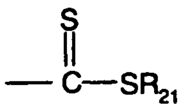 ; 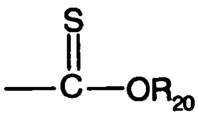 ; $-C_{n'}F_{2n'+1}$

dans laquelle : $R_{17}$, $R_{18}$, $R_{19}$, $R_{20}$ est un alkyle, un alcényle, un alcynyle ou un trialkylsilyle substitué ou non, et n' compris entre 1 et 50.

**4.** Utilisation selon l'une quelconque des revendications 1 à 3, **caractérisée en ce que** La et Lβ forment ensemble un ligand Lδ de formule (IV) dans laquelle $Y_1$ et $Y_2$ représentent, soit tous les deux $CR_aR_b$, soit tous les deux $SiR_cR_d$, de telle sorte que lesdits complexes ont, soit pour formule (IV.1), soit pour formule (IV.2) :

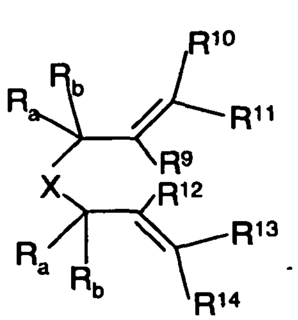

**(IV.1)**

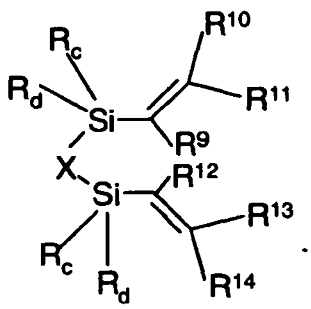

**(IV.2)**

où :

les deux $R_a$, les deux $R_b$, les deux $R_c$ et les deux $R_d$. sont identiques entre eux, et $R^9 = R^{12}$ ; $R^{10} = R^{14}$ ; et $R^{11}$

$= R^{13}$.

5. Utilisation selon l'une quelconque des revendications 1 à 4, **caractérisée en ce que** les complexes du platine (a) sont les complexes métalliques de formule (I.1) suivante :

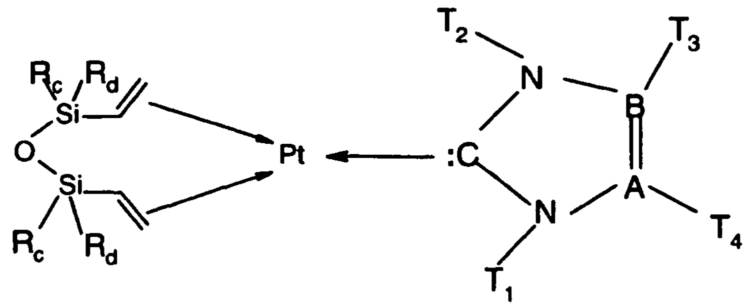

(I.1)

dans laquelle :

$T_1$ et $T_2$ sont identiques et sont tels que définis ci-dessus ;
$T_3$ et $T_4$ sont tels que définis ci-dessus ;
$R_c$ et $R_d$ sont tels que définis ci-dessus.

6. Utilisation selon l'une quelconque des revendications 1 à 5, **caractérisée en ce que** b) est une association de a) avec un autre complexe du platine sélectionné parmi :

- l'acide hexachloroplatinique $H_2PtCl_6$ et ses dérivés ;
- les complexes de formule ($PtCl_2$, oléfine)$_2$, l'oléfine du complexe représentant notamment l'éthylène, le propylène, le butylène, le cyclohexène, le styrène ; et
- les complexes du platine et d'organopolysiloxanes vinylés.

7. Utilisation selon l'une quelconque des revendications 1 à 6, **caractérisée en ce que** la quantité de composé(s) particulier(s) du platine [additif(s) stabilisant(s) (a) + éventuellement (b)], exprimée en partie en poids de platine élémentaire par rapport au poids total du (ou des) constituant(s) polyorganosiloxane(s) des compositions durcissables C, se situe généralement dans l'intervalle allant de 1 à 250 ppm.

8. Utilisation selon l'une quelconque des revendications 1 à 7, **caractérisée en ce que** les compositions polyorganosiloxanes durcissables C, présentées en un seul ou en plusieurs emballage(s) (mono- ou multicomposants), renferment un constituant principal formé d'un ou plusieurs constituant(s) polyorganosiloxane(s), un catalyseur approprié et éventuellement un ou plusieurs composé(s) pris dans le groupe formé par notamment :

des charges renforçantes ou semi-renforçantes ou de bourrage ou servant à adapter la rhéologie des compositions durcissables et les additifs auxiliaires habituellement utilisés dans ce domaine de la technique.

9. Utilisation selon la revendication 8, **caractérisée en ce que** les polyorganosiloxanes, constituants principaux des compositions C visées dans le cadre de l'invention, sont constitués de motifs siloxyles de formule générale :

$$R_nSiO_{\frac{4-n}{2}} \qquad (V)$$

et/ou de motifs siloxyles de formule :

$$Z_xR_ySiO_{\frac{4-x-y}{2}} \qquad (VI)$$

formules dans lesquelles les divers symboles ont la signification suivante :

- les symboles R, identiques ou différents, représentent chacun un groupement de nature hydrocarbonée non hydrolysable, ce radical pouvant être :

★ un radical alkyle, halogénoalkyle ayant de 1 à 5 atomes de carbone et comportant de 1 à 6 atomes de chlore et/ou de fluor,
★ des radicaux cycloalkyles et halogénocycloalkyles ayant de 3 à 8 atomes de carbone et contenant de 1 à 4 atomes de chlore et/ou de fluor,
★ des radicaux aryles, alkylaryles et halogénoaryles ayant de 6 à 8 atomes de carbone et contenant de 1 à 4 atomes de chlore et/ou de fluor,
★ des radicaux cyanoalkyles ayant de 3 à 4 atomes de carbone ;

- les symboles Z, représentent chacun un atome d'hydrogène ou un groupe alkényle en $C_2$-$C_6$ ;
- n = un nombre entier égal à 0, 1, 2 ou 3 ;
- x = un nombre entier égal à 0, 1, 2 ou 3 ;
- y = un nombre entier égal à 0, 1, ou 2 ;
- la somme x + y se situe dans l'intervalle allant de 1 à 3.

**10.** Utilisation selon la revendication 8 ou 9, **caractérisée en ce que** les compositions polyorganosiloxanes C sont celles, monocomposantes ou bicomposantes, réticulant à température ambiante ou à la chaleur par des réactions de polyaddition, appelées RTV, qui comprennent :

(a) 100 parties en poids d'au moins un polydiorganosiloxane choisi parmi les homopolymères et les copolymères linéaires présentant par molécule au moins 2 groupes vinyles liés à des atomes de silicium différents, situées dans la chaîne et/ou en bouts de chaîne, dont les autres radicaux organiques liés aux atomes de silicium sont choisis parmi les radicaux méthyle, éthyle et phényle, au moins 60 % molaire de ces autres radicaux étant des radicaux méthyle, et présentant une viscosité moyenne allant de 200 à 5 000 mPa.s à 25°C ;
(b) au moins un polyorganohydrogénosiloxane choisi parmi les homopolymères et les copolymères linéaires ou cycliques présentant par molécule en moyenne au moins 2 atomes d'hydrogène liés à des atomes de silicium différents et dont les radicaux organiques liés aux atomes de silicium sont choisis parmi les radicaux méthyle, éthyle et phényle, au moins 60 % molaire de ces radicaux étant des radicaux méthyle, et présentant une viscosité allant de 5 à 1 000 mPa.s à 25°C, le réactif (b) étant utilisé en quantité telle que le rapport molaire des fonctions hydrure de (b) sur les groupes vinyle de (a) est compris entre 1,0 et 10 ;
(c) une quantité catalytiquement efficace d'un catalyseur au platine ;
(d) 0 à 120 partie(s) en poids de charge(s) siliceuse(s) pour 100 parties en poids de l'ensemble des polyorganosiloxanes (a) + (b).

**11.** Utilisation selon les revendications 8 à 10, **caractérisée en ce que** les compositions polyorganosiloxanes C sont celles, monocomposantes ou bicomposantes, réticulant à la chaleur par des réactions de polyaddition, appelées compositions LSR, ces compositions répondant aux définitions données ci-avant dans la revendication 10 à propos des compositions préférées appelées RTV, sauf en ce qui concerne la viscosité du réactif polydiorganosiloxane vinylé (a) qui cette fois est supérieure à 1 000 mPa.s.

**12.** Utilisation selon la revendication 8 ou 9, **caractérisée en ce que** les compositions polyorganosiloxanes C sont celles sont celles, monocomposantes ou bicomposantes, réticulant à la chaleur par des réactions de polyaddition, appelées compositions EVC de polyaddition, qui comprennent :

(a') 100 parties en poids d'au moins une gomme polydiorganosiloxane qui est un homopolymère ou copolymère linéaire présentant par molécule au moins 2 groupes vinyles liés à des atomes de silicium différents, situés dans la chaîne et/ou en bouts de chaîne, dont les autres radicaux organiques liés aux atomes de silicium sont choisis parmi les radicaux méthyle, éthyle, phényle, au moins 60 % molaire de ces autres radicaux étant des radicaux méthyle, et ladite gomme présentant une viscosité supérieure à 300.000 mPa.s à 25°C ;
(b') au moins un polyorganohydrogénosiloxane choisi parmi les homopolymères et les copolymères linéaires, cycliques ou en réseau présentant par molécule au moins 3 atomes d'hydrogène liés à des atomes de silicium différents et dont les radicaux organiques liés aux atomes de silicium sont choisis parmi les radicaux méthyle, éthyle, phényle, au moins 60 % molaire de ces radicaux étant des radicaux méthyle, et présentant une viscosité allant de 5 à 1 000 mPa.s à 25°C, le réactif (b') étant utilisé en quantité telle que le rapport molaire des fonctions hydrure de (b') sur les groupes vinyle de (a') est compris entre 0,4 et 10 ;
(c') une quantité catalytiquement efficace d'un catalyseur au platine ;

(d') 0,5 à 120 partie(s) en poids de charge(s) siliceuse(s) pour 100 parties en poids de l'ensemble des polyorganosiloxanes (a') + (b').

**13.** Utilisation selon la revendication 8 ou 9, **caractérisée en ce que** les compositions polyorganosiloxanes C sont celles, monocomposantes, appelées EVC, comprenant :

(a") 100 parties en poids d'au moins une gomme polydiorganosiloxane qui est un homopolymère ou un copolymère linéaire présentant par molécule au moins 2 groupes vinyles liés à des atomes de silicium différents, situés dans la chaîne et/ou en bouts de chaîne, dont les autres radicaux organiques liés aux atomes de silicium sont choisis parmi les radicaux méthyle, éthyle, phényle, au moins 60 % molaire de ces autres radicaux étant des radicaux méthyle, et ladite gomme présentant une viscosité d'au moins 300 000 mPa.s à 25°C ;
(b") 0,1 à 7 parties en poids d'un peroxyde organique ;
(c") 0,5 à 120 parties en poids de charge(s) siliceuse(s) pour 100 parties en poids de gomme (a").

**14.** Utilisation selon l'une quelconque des revendications 10 à 13, **caractérisée en ce que** les compositions polyorganosiloxanes C contiennent en outre un ou plusieurs additif(s) auxiliaire(s) (e) tels que : au moins un produit dit "antistructure" (e1) ; et/ou au moins une résine polysiloxane (e2) ; et/ou au moins un agent à base d'un sel, d'un hydroxyde ou d'un oxyde métallique (e3) ; et/ou au moins un pigment (e4) pour fabriquer des articles colorés ; et/ou au moins un composé à base de bore (e5) ; et/ou au moins une charge (e6) de type fondant et/ou de type lamellaire qui peut (peuvent) associé(s) ou non à une ou plusieurs espèce(s) minérale(s) appropriée(s) afin de donner naissance dans le cas d'un incendie à la formation d'une substance cendreuse isolante ; et/ou au moins un agent d'adhérence (e7) ; et/ou au moins un retardateur de réticulation (e8) dans le cas des compostions silicones C réticulant par des réactions de polyadditions appelées RTV, LCR ou EVC de polyaddition.

## Claims

**1.** Use of a stabilizing additive to improve the resistance to decomposition of silicone elastomers under the effect of very high temperatures of 500°C or more, said silicone elastomers being obtained from a polyorganosiloxane composition C which crosslinks either, on the one hand, at high temperature under the action of organic peroxides or, on the other hand, at ambient temperature or with heat by polyaddition reactions in the presence of a metal catalyst, said stabilizing additive being a compound chosen from the group formed by:

a) at least one platinum complex selected from the products of formula (1):

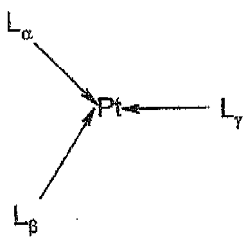

(I)

in which:

➢ $L_\gamma$ represent a carbene of formula (II):

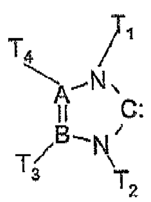

II

(II)

in which:

■ A and B independently represent C or N, it being understood that, when A represents N, then $T_4$ does not represent anything and, when B represents N, then $T_3$ does not represent anything;

■ $T_3$ and $T_4$ independently represent a hydrogen atom; an alkyl group; a cycloalkyl group optionally substituted by alkyl or alkoxy; an aryl group optionally substituted by alkyl or alkoxy; an alkenyl group; an alkynyl group; or an arylalkyl group in which the aryl part is optionally substituted by alkyl or alkoxy; or else

■ $T_3$ and $T_4$ can form, together and with A and B when the latter each represent a carbon atom, an aryl;

■ $T_1$ and $T_2$ independently represent an alkyl group; an alkyl group optionally substituted by alkyl; a perfluorinated alkyl group or an alkyl group optionally substituted by a perfluoroalkyl group; a cycloalkyl group optionally substituted by alkyl or alkoxy; ain aryl group optionally substituted by alkyl or alkoxy; an alkenyl group; an alkynyl group; or an arylalkyl group in which the aryl part is optionally substituted by alkyl or alkoxy; or else

■ $T_1$ and $T_2$ independently represent a monovalent radical of following formula (V):

$$V_1{-}V_2 \qquad (V)$$

in which:

- V1 is a divalent hydrocarbon radical,
- $V_2$ is a monovalent radical chosen from the group of the following substituents:
  - ♦ alkoxy, -OR° with R° corresponding to alkyl or aryl,
  - ♦ amine, $N(R°)_2$ with R° corresponding to hydrogen, alkyl or aryl,

■ $T_1$ and $T_2$ independently represent a monovalent radical of following formula (W):

$$W_1{-}\omega{-}W_2 \qquad (W)$$

in which:

- $W_1$ is a divalent hydrocarbon radical,
- ω represents:

$$-R^1C{=}CR^1-$$

with $R^1$ corresponding to H or alkyl
or

$$-C{\equiv}C-$$

- $W_2$ is a monovalent radical chosen from the group of the following substituents:
  - ♣ $R^2$ = alkyl or H;
  - ♣ Si-alkyl or Si-alkoxy,
  - ♣ ketone,
  - ♣ carboxyl,
  - ♣ amide,
  - ♣ acyl,

■ or again the substituents $T_1$, $T_2$, $T_3$ and $T_4$ can form, in pairs, when they are situated on two adjacent ring members in the formula (II), a saturated or unsaturated hydrocarbon chain;

➢ $L_\alpha$ and $L_\beta$ are ligands which are identical to or different from one another and

→ each represent:

-

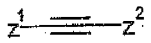

(III.1)

-

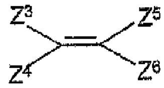

(III.2)

with, in these formulae (III.1) and (III.2):

$Z^1$, $Z^2$, $Z^3$, $Z^4$, $Z^5$ and $Z^6$
$ each independently representing:

f. hydrogen,
g. a halogen,
h. a cyano,
i. a saturated or unsaturated electron-withdrawing hydrocarbon group,
j. it being possible for two vicinal $Z^1$ to $Z^6$ together to form an electron-withdrawing ring different from the carbone $L_\gamma$ of formula (II) and optionally comprising heteroatoms (preferably 0, N or S);

$ or the substituents $Z^1$ and $Z^2$ together form, in (III.1), a monovalent alkenyl radical comprising at least one electron-withdrawing residue;
$ or again $Z^3$ to $Z^6$ form, in pairs, in (III.2), a monovalent alkenyl radical comprising at least one electron-withdrawing residue;

→ or together form the ligand $L_\delta$ of formula (IV):

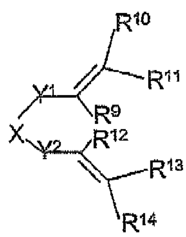

(IV)

in which:

☐ $Y^1$ and $Y^2$ represent, independently of one another, $CR_aR_b$ or $SiR_cR_d$;
☐ X represents O, $NR_e$ or $CR_fR_g$;
☐ $R^{10}$, $R^{11}$, $R^{13}$ and $R^{14}$, which are identical or different, are chosen from a hydrogen atom, an alkyl group or an aryl group optionally substituted by alkyl;
☐ $R^9$, $R^{12}$, $R_a$, $R_b$ and $R_e$ are chosen independently from a hydrogen atom; an alkyl group; an acyl group; an aryl group optionally substituted by alkyl; a cycloalkyl group optionally substituted by alkyl; and an arylalkyl group in which the aryl part is optionally substituted by alkyl;
☐ $R_c$ $R_c$ and $R_d$ are chosen independently from alkyl; aryl optionally substituted by alkyl; cycloalkyl optionally substituted by alkyl; and arylalkyl in which the aryl part is optionally substituted by alkyl; or else
☐ when $Y^1$ and $Y^2$ independently represent $SiR_cR_d$, two $R_c$ groups bonded to two separate silicon

atoms together form a chain of formula:

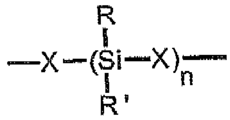

in which n is an integer from 1 to 5; X is as defined above; R and R', which are identical or different, take any one of the meanings given above for $R_c$ or $R_d$; cr else when $Y^1$ and $Y^2$ independently represent $SiR_cR_d$, two $R_c$ groups bonded to separate silicon atoms together form a saturated hydrocarbon chain, the two $R_c$ groups, together with said silicon atoms and X, forming a 6- to 10-membered ring; or else

☐ when $Y^1$ and $Y^2$ independently represent $CR_aR_b$, two $R_a$ groups bonded to separate carbon atoms together form a saturated hydrocarbon chain, the two $R_a$ groups, together with the carbon atoms which carry them and X, forming a 6- to 10-membered ring; and

☐ $R_f$ and $R_g$ represent, independently of one another, a hydrogen atom; an alkyl group; an acyl group; an aryl group optionally substituted by alkyl; a cycloalkyl group optionally substituted by alkyl; an arylalkyl group in which the aryl part is optionally substituted by alkyl; a halogen atom; an alkenyl group; an alkynyl group; or an $SiG_1G_2G_3$ group where $G_1$, $G_2$ and $G_3$ are, independently of one another, alkyl; alkoxy; aryl optionally substituted by alkyl or alkoxy; or arylalkyl in which the aryl part is optionally substituted by alkyl or alkoxy; and

b) a combination of a) with at least one other platinum complex selected from the complexes: platinum in the zero oxidation state, platinum in the +2 oxidation state or platinum in the +4 oxidation state.

2. Use according to Claim 1, **characterized in that**, in the carbene ligands of formula (II):

► $T_3$ and $T_4$ represent a hydrogen atom or together form a phenyl,

► and/or $T_1$ and $T_2$, which are identical or different, represent $(C_1\text{-}C_8)$alkyl or $(C_3\text{-}C_8)$cycloalkyl or allyl $(\text{-}CH_2\text{-}CH{=}CH_2)$ or methallyl $(\text{-}CH_2\text{-}C(CH_3){=}CH_2)$ or propargyl $(\text{-}(CH_2)_2\text{-}C{=}CH)$,

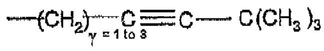

or

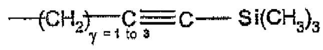

or $-(CH_2)_{\gamma\text{-}1}$ to $_4$-amine
or $-(CH_2)_{\gamma=1}$ to $_4$-alkoxy;
and/or A and B both represent a carbon atom.

3. Use according to Claim 1 or 2, **characterized in that**, in the formulae (III.1) and (III.2), the electron-with drawing residues are chosen from the group consisting of:

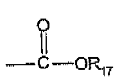 ; 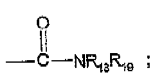 ; 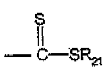 ; 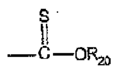 ; 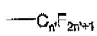

in which: $R_{17}$, $R_{18}$, $R_{19}$ or $R_{20}$ is an alkyl, an alkenyl, an alkynyl or a trialkylsilyl which may or may not be substituted, and n' is between 1 and 50.

4. Use according to any one of Claims 1 to 3, **characterized in that** $L_\alpha$ and $L_\beta$ together form a ligand $L_8$ of formula (IV) in which $Y^1$ and $Y^2$ represent either both $CR_aR_b$ or both $SiR_cR_d$, so that said complexes are either of formula (IV.1) or of formula (IV.2):

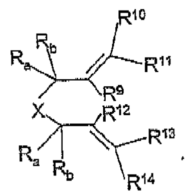

(IV.1)

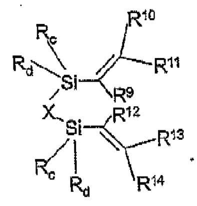

(IV.2)

where:
the two $R_a$ groups, the two $R_b$ groups, the two $R_c$ groups and the two $R_d$ groups are identical to one another, and $R^9 = R^{12}$; $R^{10} = R^{14}$; and $R^{11} = R^{13}$.

5. Use according to any one of Claims 1 to 4, **characterized in that** the platinum complexes (a) are metal complexes of following formula (I.1):

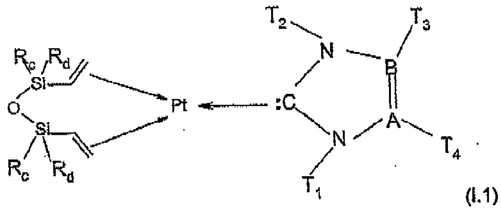

(I.1)

in which:

$T_1$ and $T_2$ are identical and are as defined above;
$T_3$ and $T_4$ are as defined above;
$R_c$ and $R_d$ are as defined above.

6. Use according to any one of Claims 1 to 5, **characterized in that** b) is a combination of a) with another platinum complex selected from:

- hexachloroplatinic acid $H_2PtCl_6$ and its derivatives;
- complexes of formula $(PtCl_2{\cdot}olefin)_2$, the olefin of the complex representing in particular ethylene, propylene, butylene, cyclohexene or styrene; and
- complexes of platinum and of vinylated organopolysiloxanes.

7. Use according to any one of Claims 1 to 6, **characterized in that** the amount of specific platinum compound(s) [stabilizing additive(s) (a) + optionally (b)], expressed in parts by weight of elemental platinum with respect to the total weight of the polyorganosiloxane constituent(s) of the curable compositions C, generally lies in the range extending from 1 to 250 ppm.

8. Use according to any one of Claims 1 to 7, **characterized in that** the curable polyorganosiloxane compositions C, presented in just one or in several packaging(s) (single- or multicomponent), include a main constituent formed of one or more polyorganosiloxane constituent(s), an appropriate catalyst and optionally one or more compound(s) taken from the group formed in particular by: reinforcing or semireinforcing or bulking fillers or fillers used to adjust the rheology of the curable compositions, and the auxiliary additives commonly used in this field of technology.

9. Use according to Claim 8, **characterized in that** the polyorganosiloxanes which are the main constituents of the compositions C targeted in the context of the invention are composed of siloxyl units of general formula:

$$R_nSiO_{\frac{4-n}{2}} \quad (V)$$

and/or of siloxyl units of formula:

$$Z_xR_ySiO_{\frac{4-x-y}{2}} \quad \text{(VI)}$$

in which formulae the various symbols have the following meanings:

- the R symbols, which are identical or different, each represent a group of nonhydrolyzable hydrocarbon nature, it being possible for this radical to be:

  ★ an alkyl or haloalkyl radical having from 1 to 5 carbon atoms and comprising from 1 to 6 chlorine and/or fluorine atoms,
  ★ cycloalkyl and halocycloalkyl radicals having from 3 to 8 carbon atoms and comprising from 1 to 4 chlorine and/or fluorine atoms,
  ★ aryl, alkylaryl and haloaryl radicals having from 6 to 8 carbon atoms and comprising from 1 to 4 chlorine and/or fluorine atoms,
  ★ cyanoalkyl radicals having from 3 to 4 carbon atoms;

- the Z symbols each represent a hydrogen atom or a $C_2$-$C_6$ alkynyl group;
- n = an integer equal to 0, 1, 2 or 3;
- x = an integer equal to 0, 1, 2 or 3;
- y = an integer equal to 0, 1 or 2;
- the sum x + y lies in the range extending from 1 to 3.

**10.** Use according to Claim 8 or 9, **characterized in that** the polyorganosiloxane compositions C are those, single-component or two-component, which crosslink at ambient temperature or with heat by polyaddition reactions, referred to as RTVs, which comprise:

(a) 100 parts by weight of at least one polydiorganosiloxane chosen from linear homopolymers and copolymers exhibiting, per molecule, at least 2 vinyl groups bonded to different silicon atoms situated in the chain and/or at the chain ends, the other organic radicals of which bonded to silicon atoms are chosen from the methyl, ethyl and phenyl radicals, at least 60 mol% of these other radicals being methyl radicals, and exhibiting a mean viscosity ranging from 200 to 5000 mPa·s at 25°C:
(b) at least one polyorganohydrosiloxane chosen from linear or cyclic homopolymers and copolymers exhibiting, per molecule, on average at least 2 hydrogen atoms bonded to different silicon atoms, the organic radicals of which bonded to silicon atoms are chosen from the methyl, ethyl and phenyl radicals, at least 60 mol% of these radicals being methyl radicals, and exhibiting a viscosity ranging from 5 to 1000 mPa·s at 25°C, the reactant (b) being used in amounts such that the molar ratio of the hydride functional groups of (b) to the vinyl groups of (a) is between 1.0 and 10;
(c) a catalytically effective amount of a platinum catalyst;
(d) 0 to 120 part(s) by weight of siliceous filler(s) per 100 parts by weight of the combination of the polyorganosiloxanes (a) + (b).

**11.** Use according to Claims 8 to 10, **characterized in that** the polyorganosiloxane compositions C are those, single-component or two-component, which crosslink with heat by polyaddition reactions, referred to as LSR compositions, these compositions corresponding to the definitions given above in claim 10 with regard to the preferred compositions referred to as RTVs, except as regards the viscosity of the vinylated polydiorganosiloxane reactant (a), which this time is greater than 1000 mPa·s.

**12.** Use according to Claim 8 or 9, **characterized in that** the polyorganosiloxane compositions C are those, single-component or two-component, which crosslink with heat by polyaddition reactions, referred to as polyaddition HCE compositions, which comprise:

(a') 100 parts by weight of at least one polydiorganosiloxane gum which is a linear homopolymer or copolymer exhibiting, per molecule, at least 2 vinyl groups bonded to different silicon atoms situated in the chain and/or at the chain ends, the other organic radicals of which bonded to silicon atoms are chosen from the methyl, ethyl or phenyl radicals, at least 60 mol% of these other radicals being methyl radicals, and said gum exhibiting a

viscosity of greater than 300 000 mPa·s at 25°C;
(b') at least one polyorganohydrosiloxane chosen from linear, cyclic or network homopolymers or copolymers exhibiting, per molecule, at least 3 hydrogen atoms bonded to different silicon atoms, the organic radicals of which bonded to silicon atoms are chosen from the methyl, ethyl or phenyl radicals, at least 60 mol% of these radicals being methyl radicals, and exhibiting a viscosity ranging from 5 to 1000 mPa·s at 25°C, the reactant (b') being used in amounts such that the molar ratio of the hydride functional groups of (b') to the vinyl groups of (a') is between 0.4 and 10;
(c') a catalytically effective amount of a platinum catalyst;
(d') 0.5 to 120 part(s) by weight of siliceous filler(s) per 100 parts by weight of the combination of the polyorganosiloxanes (a') + (b').

**13.** Use according to Claim 8 or 9, **characterized in that** the polyorganosiloxane compositions C are those, single-component, referred to as HCEs, comprising:

(a") 100 parts by weight of at least one polydiorganosiloxane gum which is a linear homopolymer or copolymer exhibiting, per molecule, at least 2 vinyl groups bonded to different silicon atoms situated in the chain and/or at the chain ends, the other organic radicals of which bonded to silicon atoms are chosen from the methyl, ethyl or phenyl radicals, at least 60 mol% of these other radicals being methyl radicals, and said gum exhibiting a viscosity of at least 300 000 mPa·s at 25°C;
(b") 0.1 to 7 parts by weight of an organic peroxide;
(c") 0.5 to 120 parts by weight of siliceous filler(s) per 100 parts by weight of gum (a").

**14.** Use according to any one of Claims 10 to 13, **characterized in that** the polyorganosiloxane compositions C in addition comprise one or more auxiliary additive(s) (e), such as: at least one "antistructuring" product (e1); and/or at least one polysiloxane resin (e2); and/or at least one agent based on a metal oxide or hydroxide or salt (e3); and/or at least one pigment (e4) for manufacturing colored articles; and/or at least one boron-based compound (e5); and/or at least one filler (e6) of flux type and/or of lamellar type which may or may not be used in combination with one or more appropriate inorganic entity(ies) in order to give rise, in the case of a fire, to the formation of an insulating ashy substance; and/or at least one adhesion promoter (e7); and/or at least one crosslinking retarder (e8) in the case of the silicone compositions C which crosslink by polyaddition reactions referred to as RTVs, LSRs or polyaddition HCEs.

## Patentansprüche

**1.** Verwendung eines stabilisierenden Zusatzstoffs zur Verbesserung der Beständigkeit von Silikonelastomeren gegenüber Abbau infolge sehr hoher Temperaturen von 500 °C oder mehr, wobei die Silikonelastomere ausgehend von einer Polyorganosiloxanverbindung C erhalten werden, die sich entweder bei erhöhter Temperatur unter der Einwirkung organischer Peroxide oder bei Umgebungstemperatur oder bei Wärme durch Polyadditionsreaktionen in Gegenwart eines Metallkatalysators vernetzt, wobei der stabilisierende Zusatzstoff eine Verbindung ist, ausgewählt aus der Gruppe bestehend aus:

a) mindestens einem Platinkomplex, ausgewählt aus den Produkten mit der Formel (I):

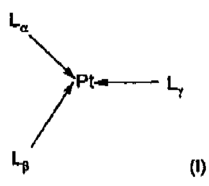

(I)

worin:

➢ $L_\gamma$ für ein Carben mit der Formel (II) steht:

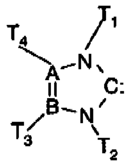 II

(II)

worin:

- ■ A und B unabhängig für C oder N stehen, wobei gilt, dass, wenn A für N steht, $T_4$ für nichts steht und wenn B für N steht, $T_3$ für nichts steht;
- ■ $T_3$ und $T_4$ unabhängig für ein Wasserstoffatom; eine Alkylgruppe; eine Cycloalkylgruppe, gegebenenfalls substituiert mit Alkyl oder Alkoxy; eine Arylgruppe, gegebenenfalls substituiert mit Alkyl oder Alkoxy; eine Alkenylgruppe; eine Alkinylgruppe; oder eine Arylalkylgruppe steht, worin der Arylteil gegebenenfalls mit Alkyl oder Alkoxy substituiert ist; oder auch
- ■ $T_3$ und $T_4$ gemeinsam und mit A und B, wenn diese jeweils für ein Kohlenstoffatom stehen, ein Aryl bilden können;
- ■ $T_1$ und $T_2$ unabhängig für eine Alkylgruppe; eine Alkylgruppe, gegebenenfalls substituiert mit Alkyl; eine perfluorierte oder gegebenenfalls mit einer Perfluoralkylgruppe substituierte Alkylgruppe; eine Cycloalkylgruppe, gegebenenfalls substituiert mit Alkyl oder Alkoxy; eine Arylgruppe, gegebenenfalls substituiert mit Alkyl oder Alkoxy; eine Alkenylgruppe; eine Alkinylgruppe; oder eine Arylalkylgruppe steht, worin der Arylteil gegebenenfalls mit Alkyl oder Alkoxy substituiert ist; oder auch
- ■ $T_1$ und $T_2$ unabhängig für einen einwertigen Rest mit der folgenden Formel (v) stehen:

$$V_1—V_2 \quad (V)$$

worin:

- • $V_1$ ein zweiwertiger Kohlenwasserstoffrest ist,
- • $V_2$ ein einwertiger Rest ist, ausgewählt aus der Gruppe der folgenden Substituenten:
  - ♦ Alkoxy, $-OR^0$, wobei $R^0$ Alkyl, Aryl entspricht,
  - ♦ Amin $N(R^0)_2$, wobei $R^0$ Wasserstoff, Alkyl, Aryl entspricht,
- • $T_1$ und $T_2$ unabhängig für einen einwertigen Rest mit der folgenden Formel (W) stehen:

$$W_1 - \omega - W_2 \quad (W)$$

worin:

- • $W_1$ ein zweiwertiger Kohlenwasserstoffrest ist,
- • ω für:

$$- R^1C = CR^1 -,$$

wobei $R^1$ H oder Alkyl entspricht oder

$$- C \equiv C - \text{steht},$$

- • $W_2$ ein einwertiger Rest ist, ausgewählt aus der Gruppe der folgenden Substituenten:
  - ♣ R2 = Alkyl, H;
  - ♣ Si-Alkyl oder Si-Alkoxy,
  - ♣ Keton,

- Carboxy,
- Amid,
- Acyl,

• oder die Substituenten $T_1$, $T_2$, $T_3$ und $T_4$, jeweils zu zweit, wenn sie sich auf zwei benachbarten Spitzen in der Formel (II) befinden, auch eine gesättigte oder ungesättigte Kohlenwasserstoffkette bilden können;

➢ $L_\alpha$ und $L_\beta$ gleiche oder voneinander verschiedene Liganden sind und

→ jeweils für:

-

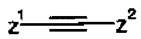

(III.1)

-

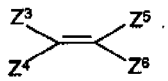

(III.2)

stehen, wobei in diesen Formeln (III.1) und (II1.2) :
$Z^1$, $Z^2$ $Z^3$, $Z^4$, $Z^5$, $Z^6$
• jeweils unabhängig voneinander für:

f. Wasserstoff,
g. ein Halogen,
h. ein Cyano,
i. eine gesättigte oder nicht gesättigte elektronenziehende Kohlenwasserstoffgruppe stehen,
j. zwei benachbarte $Z^{1-6}$ gemeinsam einen elektronenziehenden Ring bilden können, der verschieden vom Carben $L_\gamma$ der Formel (II) ist, und gegebenenfalls Heteroatome (bevorzugt O, N, S) umfasst;

• oder die Substituenten $Z^1$ und $Z^2$ in (III.1) gemeinsam einen einwertigen Alkenylrest bilden, der mindestens einen elektronenziehenden Rest umfasst;
• oder $Z^3$ und $Z^6$, jeweils zu zweit in (III.2) einen einwertigen Alkenylrest bilden, der mindestens einen elektronenziehenden Rest umfasst;

→ der gemeinsam den Liganden Lδ mit der Formel (IV) bilden:

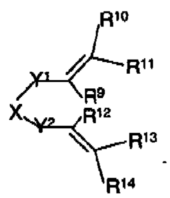

(IV)

worin:

❖ $Y_1$ und $Y_2$ unabhängig voneinander für $CR_aR_b$ oder $SiR_cR_d$ stehen;
❖ X für O, $NR_e$ oder $CR_fR_g$ steht;

❖ $R^{10}$, $R^{11}$, $R^{13}$ und $R^{14}$, gleich oder verschieden, ausgewählt sind aus einem Wasserstoffatom, einer Alkylgruppe und einer Arylgruppe, gegebenenfalls substituiert mit Alkyl;
❖ $R^9$, $R^{12}$, $R_a$, $R_b$ und $R_e$ unabhängig ausgewählt sind aus einem Wasserstoffatom; einer Alkylgruppe; einer Acylgruppe; einer Arylgruppe, gegebenenfalls substituiert mit Alkyl; einer Cycloalkylgruppe, gegebenenfalls substituiert mit Alkyl; und einer Arylalkylgruppe, worin der Arylteil gegebenenfalls mit Alkyl substituiert ist;
❖ $R_c$ und $R_d$ unabhängig ausgewählt sind aus Alkyl; Aryl, gegebenenfalls substituiert mit Alkyl; Cycloalkyl, gegebenenfalls substituiert mit Alkyl; und Arylalkyl, worin der Arylteil gegebenenfalls mit Alkyl substituiert ist; oder auch
❖ wenn $Y_1$ und $Y_2$ unabhängig für $SiR_cR_d$ stehen, zwei $R_c$-Gruppen, gebunden an zwei unterschiedliche Siliciumatome, gemeinsam eine Kette mit der folgenden Formel bilden:

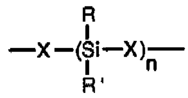

worin n eine ganze Zahl von 1 bis 5 ist; X so ist, wie oben definiert; R und R', gleich oder verschieden, irgendeine der Bedeutungen annehmen, die oben für $R_e$ oder $R_d$ angegeben wurden; oder auch
wenn $Y_1$ und $Y_2$ unabhängig für $SiR_cR_d$ stehen, zwei $R_c$-Gruppen, gebunden an unterschiedliche Siliciumatome, gemeinsam eine gesättigte Kohlenwasserstoffkette bilden, die beiden $R_c$-Gruppen, gemeinsam mit den Siliciumatomen und X einen Ring mit 6 bis 10 Gliedern bilden;
oder auch
❖ wenn $Y_1$ und $Y_2$ unabhängig für $CR_aR_b$ stehen, zwei $R_a$-Gruppen, gebunden an unterschiedliche Kohlenstoffatome, gemeinsam eine gesättigte Kohlenwasserstoffkette bilden, die beiden $R_a$-Gruppen, gemeinsam mit den Kohlenstoffatomen, die sie tragen, und X einen Ring mit 6 bis 10 Gliedern bilden; und
❖ $R_f$ und $R_g$ unabhängig voneinander für ein Wasserstoffatom; eine Alkylgruppe; eine Acylgruppe; eine Arylgruppe, gegebenenfalls substituiert mit Alkyl; eine Cycloalkylgruppe, gegebenenfalls substituiert mit Alkyl; eine Arylalkylgruppe, worin der Arylteil gegebenenfalls mit Alkyl substituiert ist; ein Halogenatom; eine Alkenylgruppe; eine Alkinylgruppe; oder eine Gruppe $SiG_1G_2G_3$, wobei $G_1$, $G_2$ und $G_3$ unabhängig voneinander Alkyl; Alkoxy; Aryl, gegebenenfalls substituiert mit Alkyl oder Alkoxy; oder eine Arylalkylgruppe sind, wobei der Arylteil gegebenenfalls mit Alkyl oder Alkoxy substituiert ist, stehen, und

b) einer Assoziation von a) mit mindestens einem anderen Platinkomplex, ausgewählt aus den Komplexen: mit Platin mit Oxidationszahl Null, mit Platin mit Oxidationszahl +2 oder mit Platin mit Oxidationszahl +4.

2. Verwendung nach Anspruch 1, **dadurch gekennzeichnet, dass** in den Carbenliganden mit der Formel (II):

► $T_3$ und $T_4$ für ein Wasserstoffatom stehen oder gemeinsam ein Phenyl bilden,
► und/oder $T_1$ und $T_2$, gleich oder verschieden, für $(C_1\text{-}C_8)$Alkyl oder $(C_3\text{-}C_8)$Cycloalkyl oder Allyl $(-CH_2\text{-}CH{=}CH_2)$ oder Methallyl $(-CH_2\text{-}C(CH_3){=}CH_2)$ oder Propargyl $(-(CH_2)_2\text{-}C{\equiv}CH)$

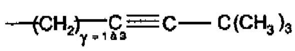

oder

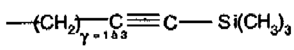

oder $-(CH_2)_{\gamma=1\text{-}4}$-Amin
oder $-(CH_2)_{\gamma=1\text{-}4}$-Alkoxy stehen;
und/oder A und B beide für ein Kohlenstoffatom stehen.

3. Verwendung nach Anspruch 1 oder 2, **dadurch gekennzeichnet, dass** in den Formeln (III.1) und (111.2) die elektronenziehenden Reste ausgewählt sind aus der Gruppe, umfassend:

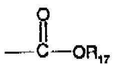 ; 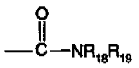 ; 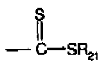 ; 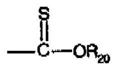 ; $-C_{n'}F_{2n'+1}$

worin: $R_{17}$, $R_{18}$, $R_{19}$, $R_{20}$ ein Alkyl, ein Alkenyl, ein Alkinyl oder ein Trialkylsilyl sind, substituiert oder nicht, und n' zwischen 1 und 50 liegt.

4. Verwendung nach irgendeinem der Ansprüche 1 bis 3, **dadurch gekennzeichnet, dass** Lα und Lβ gemeinsam einen Liganden Lδ mit der Formel (IV) bilden, worin $Y_1$ und $Y_2$, entweder beide für $CR_aR_b$ oder beide für $SiR_cR_d$ stehen, so dass die Komplexe entweder Formel (IV.1) oder Formel (IV.2) aufweisen:

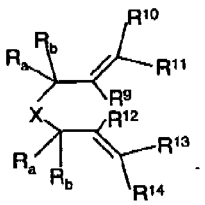

**(IV.1)**

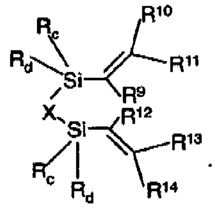

**(IV.2)**

wobei
die beiden $R_a$, die beiden $R_b$, die beiden $R_c$ und die beiden $R_d$. untereinander gleich sind, und $R^9 = R^{12}$; $R^{10} = R^{14}$; und $R^{12} = R^{13}$.

5. Verwendung nach irgendeinem der Ansprüche 1 bis 4, **dadurch gekennzeichnet, dass** die Platinkomplexe (a) die Metallkomplexe mit der folgenden Formel (I-1) sind:

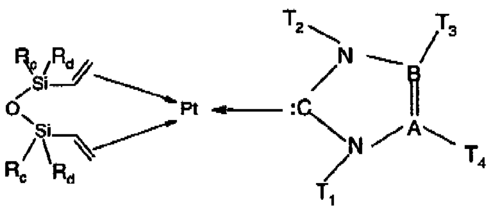

(I.1)

worin:

$T_1$ und $T_2$ gleich sind und so sind, wie oben definiert;
$T_3$ und $T_4$ so sind, wie oben definiert;
$R_c$ und $R_d$ so sind, wie oben definiert.

6. Verwendung nach irgendeinem der Ansprüche 1 bis 5, **dadurch gekennzeichnet, dass** b) eine Assoziation von a) mit einem anderen Platinkomplex ist, ausgewählt aus:

- Hexachloroplatinsäure $H_2PtCl_6$ und ihren Derivaten;
- den Komplexen mit der Formel $(PtCl_2, Olefin)_2$, wobei das olefin des Komplexes insbesondere für Ethylen, Propylen, Butylen, Cyclohexen, Styrol steht; und
- den Komplexen aus Platin und vinylierten Polyorganosiloxanen.

7. Verwendung nach irgendeinem der Ansprüche 1 bis 6, **dadurch gekennzeichnet, dass** die Menge der speziellen Platinverbindung(en) [stabilisierende(r) Zusatzstoff(e) (a) + gegebenenfalls (b)], ausgedrückt in Gewichtsanteil Elementarplatin bezogen auf das Gesamtgewicht des Polyorganosiloxanbestandteils (oder der Polyorganosiloxanbestandteile) der härtbaren Zusammensetzungen C im Allgemeinen im Bereich zwischen 1 und 250 ppm liegt.

8. Verwendung nach irgendeinem der Ansprüche 1 bis 7, **dadurch gekennzeichnet, dass** die härtbaren Polyorganosiloxanzusammensetzungen C, die in einer einzigen oder in mehreren Verpackung(en) (Einkomponenten oder

Mehrkomponenten) präsentiert werden, einen Hauptbestandteil beinhalten, der aus einem oder mehreren Polyorganosiloxanbestandteil(en), einem geeigneten Katalysator und gegebenenfalls einer oder mehreren Verbindung (en) gebildet ist, die in der Gruppe enthalten sind, bestehend insbesondere aus: verstärkenden oder halbverstärkenden oder volumenvergrößernden Füllstoffen oder Füllstoffen, die dazu dienen, die Rheologie der härtbaren Zusammensetzungen anzupassen, und Zusatzhilfsstoffen, die in diesem technischen Gebiet gewöhnlich verwendet werden.

**9.** Verwendung nach Anspruch B, **dadurch gekennzeichnet, dass** die Polyorganosiloxane, die Hauptbestandteile der Zusammensetzungen C sind, auf die sich die Erfindung richtet, aus siloxylierten Einheiten mit der allgemeinen Formel:

$$R_nSiO_{\frac{4-n}{2}} \quad \text{(V)}$$

und/oder siloxylierten Einheiten mit der Formel:

$$Z_xR_ySiO_{\frac{4-x-y}{2}} \quad \text{(VI)}$$

bestehen, wobei in diesen Formeln die unterschiedlichen Symbole die folgende Bedeutung aufweisen:

- die Symbole R, gleich oder verschieden, stehen jeweils für eine Gruppe des Typs nicht hydrolysierbarer Kohlenwasserstoff, wobei dieser Rest Folgendes sein kann:

  * ein Alkyl-, Halogenalkylrest mit 1 bis 5 Kohlenstoffatomen und umfassend 1 bis 6 Chlor- und/oder Fluoratome,
  * Cycloalkyl- und Halogencycloalkylreste mit 3 bis 8 Kohlenstoffatomen und enthaltend 1 bis 4 Chlor- und/oder Fluoratome,
  * Aryl-, Alkylaryl- und Halogenarylreste mit 6 bis 8 Kohlenstoffatomen und enthaltend 1 bis 4 Chlor- und/oder Fluoratome,
  * Cyanoalkylreste mit 3 bis 4 Kohlenstoffatomen;

- die Symbole Z stehen jeweils für ein Wasserstoffatom oder eine $C_2$-$C_6$-Alkenylgruppe;
- n = eine ganze Zahl gleich 0, 1, 2 oder 3;
- x eine ganze Zahl gleich 0, 1, 2 oder 3;
- y = eine ganze Zahl gleich 0, 1 oder 2;
- wobei die Summe x + y im Bereich zwischen 1 und 3 liegt.

**10.** Verwendung nach Anspruch 8 oder 9, **dadurch gekennzeichnet, dass** die Polyorganosiloxanzusammensetzungen C jene sind, Einkomponenten oder Zweikomponenten, die sich bei Umgebungstemperatur oder bei Wärme durch Polyadditionsreaktionen vernetzen, genannt RTV, welche Folgendes umfassen:

(a) 100 Gewichtsanteile mindestens eines Polydiorganosiloxans, ausgewählt aus den Homopolymeren und linearen Copolymeren, die pro Molekül mindestens 2 Vinylgruppen aufweisen, gebunden an verschiedene Siliciumatome, die in der Kette und/oder an den Kettenenden liegen, deren andere organische Reste, die an die Siliciumatome gebunden sind, ausgewählt sind aus den Methyl-, Ethyl- und Phenylresten, wobei mindestens 60 Mol-% dieser anderen Reste Methylreste sind, und eine mittlere Viskosität aufweisen, die von 200 bis 5.000 mPa.s bei 25 °C reicht;
(b) mindestens ein Polyorganohydrogensiloxan, ausgewählt aus den Homopolymeren und den linearen oder cyclischen Copolymeren, die pro Molekül durchschnittlich mindestens 2 Wasserstoffatome aufweisen, gebunden an verschiedene Siliciumatome, und deren organische Reste, die an die Siliciumatome gebunden sind, ausgewählt sind aus den Methyl-, Ethyl- und Phenylresten, wobei mindestens 60 Mol-% dieser Reste Methylreste sind und eine Viskosität aufweisen, die von 5 bis 1.000 mPa.s bei 25 °C reicht, wobei das Reagens (b) in einer solchen Menge verwendet wird, dass das Molverhältnis der Hydridfunktionen von (b) zu den Vinylgruppen von (a) zwischen 1,0 und 10 liegt;
(c) eine katalytisch wirksame Menge eines Platinkatalysators;

(d) 0 bis 120 Gewichtsanteile eines siliciumhaltigen Füllstoffs (siliciumhaltiger Füllstoffe) pro 100 Gewichtsanteile der Gesamtheit der Polyorganosiloxane (a) + (b).

**11.** Verwendung nach den Ansprüchen 8 bis 10, **dadurch gekennzeichnet, dass** die Polyorganosiloxanzusammensetzungen C jene sind, Einkomponenten oder Zweikomponenten, die sich bei Wärme durch Polyadditionsreaktionen vernetzen, genannt LSR-Zusammensetzungen, wobei diese Zusammensetzungen den Definitionen entsprechen, die oben in Anspruch 10 in Zusammenhang mit bevorzugten Zusammensetzungen, genannt RTV, angegeben wurden, abgesehen von dem, was die Viskosität des vinylierten Polydiorganosiloxanreagens (a) betrifft, die dieses Mal größer als 1.000 mPa.s ist.

**12.** Verwendung nach Anspruch 8 oder 9, **dadurch gekennzeichnet, dass** die Polyorganosiloxanzusammensetzungen C jene sind, Einkomponenten oder Zweikomponenten, die sich bei Wärme durch Polyadditionsreaktionen vernetzen, genannt Polyadditions-HCR-Zusammensetzungen, welche Folgendes umfassen:

(a') 100 Gewichtsanteile mindestens eines Polydiorganosiloxangummis, der ein Homopolymer oder ein lineares Copolymer ist, das pro Molekül mindestens 2 Vinylgruppen aufweist, gebunden an verschiedene Siliciumatome, die in der Kette und/oder an den Kettenenden liegen, dessen andere organische Reste, die an die Siliciumatome gebunden sind, ausgewählt sind aus den Methyl-, Ethyl-, Phenylresten, wobei mindestens 60 Mol-% dieser anderen Reste Methylreste sind und wobei der Gummi eine Viskosität größer als 300.000 mPa.s bei 25 °C aufweist;
(b') mindestens ein Polyorganohydrogensiloxan, ausgewählt aus den Homopolymeren und den linearen oder cyclischen oder vernetzten Copolymeren, die pro Molekül mindestens 3 Wasserstoffatome aufweisen, gebunden an verschiedene Siliciumatome, und deren organische Reste, die an die Siliciumatome gebunden sind, ausgewählt sind aus den Methyl-, Ethyl- und Phenylresten, wobei mindestens 60 Mol-% dieser Reste Methylreste sind und eine Viskosität aufweisen, die von 5 bis 1.000 mPa.s bei 25 °C reicht, wobei das Reagens (b') in einer solchen Menge verwendet wird, dass das Molverhältnis der Hydridfunktionen von (b') zu den Vinylgruppen von (a') zwischen 0,4 und 10 liegt;
(c') eine katalytisch wirksame Menge eines Platinkatalysators;
(d') 0,5 bis 120 Gewichtsanteile eines siliciumhaltigen Füllstoffs (siliciumhaltiger Füllstoffe) pro 100 Gewichtsanteile der Gesamtheit der Polyorganosiloxane (a') + (b').

**13.** Verwendung nach Anspruch 8 oder 9, **dadurch gekennzeichnet, dass** die Polyorganosiloxanzusammensetzungen C jene sind, Einkomponenten, genannt HCR, umfassend:

(a'') 100 Gewichtsanteile mindestens eines Polydiorganosiloxangummis, der ein Homopolymer oder ein lineares Copolymer ist, das pro Molekül mindestens 2 Vinylgruppen aufweist, gebunden an verschiedene Siliciumatome, die in der Kette und/oder an den Kettenenden liegen, dessen andere organische Reste, die an die Siliciumatome gebunden sind, ausgewählt sind aus den Methyl-, Ethyl-, Phenylresten, wobei mindestens 60 Mol-% dieser anderen Reste Methylreste sind und wobei der Gummi eine Viskosität von mindestens 300.000 mPa.s bei 25 °C aufweist;
(b'') 0,1 bis 7 Gewichtsanteile eines organischen Peroxids;
(c'') 0,5 bis 120 Gewichtsanteile eines siliciumhaltigen Füllstoffs (siliciumhaltiger Füllstoffe) pro 100 Gewichtsanteile Gummi (a'').

**14.** Verwendung nach irgendeinem der Ansprüche 10 bis 13, **dadurch gekennzeichnet, dass** die Polyorganosiloxanzusammensetzungen C ferner einen oder mehrere Zusatzhilfsstoff(e) enthalten, wie etwa: mindestens ein sogenanntes "strukturierungsverhinderndes" Produkt (e1); und/oder mindestens ein Polysiloxanharz (e2); und/oder mindestens ein Mittel auf der Basis eines Salzes, eines Hydroxids oder eines Metalloxids (e3); und/oder mindestens ein Pigment (e4) zur Herstellung farbiger Gegenstände; und/oder mindestens eine Verbindung auf der Basis von Bor (e5); und/oder mindestens einen Füllstoff (e6) des schmelzenden und/oder des lamellaren Typs, der (die) mit einer oder mehreren geeigneten mineralischen Spezies assoziiert werden kann (können) oder nicht, um im Fall eines Brands eine isolierende ascheartige Substanz entstehen zu lassen; und/oder mindestens eine Adhäsionsmittel (e7); und/oder mindestens einen Vernetzungsverzögerer (e8) im Fall der Silikonzusammensetzungen C, die sich durch Polyadditionsreaktionen vernetzen, genannt RTV, LSR oder Polyadditons-HCR.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- JP 51035501 A
- FR 2166313 A
- EP 0347349 A
- EP 0951503 A
- US 2823218 A
- US 3159601 A
- US 3159662 A
- US 3775452 A
- WO 0142258 A
- WO 02098971 A
- US 3220972 A
- US 3284406 A
- US 3436366 A
- US 3697473 A
- US 4340709 A
- US 3142655 A
- US 3821140 A
- US 3836489 A
- US 3839266 A
- FR 1528464 A
- FR 2372874 A
- FR 2704553 A
- WO 9858997 A


### Littérature non-brevet citée dans la description


- **WALTER NOLL.** Chemistry and Technology of Silicones. Academic Press, 1968, 386-409
- *Chem. Eur. J.,* 1996, vol. 2, 1627